(19) Europäisches Patentamt
European Patent Office
Office européen des brevets

(11) Publication number : **0 188 110 B1**

(12) **EUROPEAN PATENT SPECIFICATION**

(45) Date of publication of patent specification : **06.09.95 Bulletin 95/36**

(51) Int. Cl.$^6$ : **G02B 1/04,** C08F 251/02, C08F 220/28, C08F 299/04

(21) Application number : **85309168.4**

(22) Date of filing : **16.12.85**

(54) **Hydrogel-forming polymers.**

(30) Priority : **18.12.84 GB 8431901**
**22.05.85 GB 8513004**
**29.07.85 GB 8519071**

(43) Date of publication of application : **23.07.86 Bulletin 86/30**

(45) Publication of the grant of the patent : **06.09.95 Bulletin 95/36**

(84) Designated Contracting States : **AT BE CH DE FR GB IT LI LU NL SE**

(56) References cited :
**EP-A- 0 050 934**
**EP-A- 0 113 505**
**US-A- 3 699 089**
**US-A- 3 822 089**
**US-A- 3 949 021**
**US-A- 4 139 578**

(73) Proprietor : **T R Developments Ltd**
**74 The Knoll**
**Ealing**
**London W13 8HY (GB)**

(72) Inventor : **Menashe, Tahan**
**74 The Knoll**
**Ealing**
**London W13 8HY (GB)**

(74) Representative : **Lawrence, Malcolm Graham et al**
**Hepworth, Lawrence, Bryer & Bizley**
**Merlin House**
**Falconry Court**
**Bakers Lane**
**Epping Essex CM16 5DQ (GB)**

**EP 0 188 110 B1**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The invention relates to contact lenses and intraocular lenses comprising cross-linked polymers which can be hydrated to form hydrogels having improved mechanical properties despite a generally high equilibrium water content.

Soft contact lenses are made of hydrogel, a hydrated cross-linked polymer containing hydrophilic monomer units. In use, these lenses cover the cornea, a body of a vascular tissue which requires a continuous supply of oxygen from the air in order for it to function. If starved of adequate oxygen supply, the cornea swells and becomes hazy, producing dangerous impairment of vision. Oxygen supply to the cornea in a normal eye takes place by diffusion through the tear fluid and thus the supply when the cornea is covered by a contact lens must take place by diffusion through the lens and by tear circulation to the area beneath the lens. In practice, the latter route is inadequate alone so that contact lenses must be oxygen-permeable if they are to be worn for any length of time.

The oxygen permeability of a hydrogel is a property of its material and depends primarily on the equilibrium water content. High water contents produce a lens of high oxygen permeability and low water contents lower oxygen permeability. For this reason, high equilibrium water content hydrogels are used for extended wear lenses whilst hydrogels of low water content are limited to use for daily wear lenses.

Extended wear lenses are normally also made in considerably smaller thicknesses than daily wear lenses. This is largely because thickness determines the actual oxygen transmissibility of the finished lens. However, another major reason for use of small thicknesses is the additional wearer comfort resulting from the low volume of the lens in the eye as well as the reduced level of tear production which such lenses require for their surface to be covered with a continuous permanent tear film which enables the lens to function as an efficient optical device and to remain reasonably clean.

Both methods, either of increasing the water content, or of reducing the lens thickness, suffer nevertheless from a serious drawback. In both cases the lens loses physical strength and its firmness. It becomes too soft for positive eyelid interaction and thus loses the ability to keep clean. It becomes too soft to centre properly in the eye and thus it loses stability of vision. The ultra thin lenses also become fragile and tend to break easily. The lens also tends to adhere to the eyeball and thus prevents adequate tear circulation. It also tends to buckle and becomes difficult to handle. The soft contact lens and especially the thin and the ultra thin lens tends therefore to lose most of the advantages they were initially designed to gain.

The main reason for that is the inadequate modulii of the hydrogels used for these devices. The modern hydrogels possess low modulii to enable them to function properly in the eye. Formation of hydrogels with higher modulii could overcome most of the existing drawbacks of modern soft contact lenses, which drawbacks have been mentioned earlier. However, raising the hydrogels modulii would result in rendering them brittle and the lenses made out of them even more fragile. Improving the hydrogels modulii ought therefore go hand in hand with maintaining their other physical properties and even further improving them. While the higher modulus is required to form efficient thin or ultra thin lenses that can supply enough oxygen to the cornea for extended wear use, improvement of the toughness is also required to extend the life of the lens and to make it suitable for daily wear use too.

Only the hydrogels which possess the combination of higher modulii with physical strength would qualify to form the desirable thin or ultra thin lens for both daily and extended wear.

Improved hydrogel-forming polymers need to further possess good machining and moulding characteristics, improved hydrogel surface properties and improved UV absorption characteristics which are imperative in cases of aphakia.

Attempts to improve the toughness of hydrogels have been proposed in the past but these have been unsatisfactory for various reasons. US Patent 4327202 (Foley), for example, addresses the lack of toughness in polyhydroxyalkylated (meth) acrylic esters such as polyhydroxyethylmethacrylate (Poly-HEMA). In Foley, styrene or a styrene derivative is included in the polymer to provide toughness, thus producing a hydrophilic-hydrophobic system typified by HEMA-styrene. HEMA has an equilibrium water content of only 38.5% at 20°C and this is, of course, lowered by the styrene to a level which is not adequate to provide the oxygen transmissibility needed for extended wear. Methacrylic acid is included to raise the water content to a reasonable level but this use of an acidic material gives rise to dimensional and optical instability depending on local pH conditions. Foley's lenses were also not ultra-thin, Foley reporting only thicknesses down to 0.5mm.

Similar approaches to Foley are described in US Patents 3080348 and 3983083, although in the latter case the polymers concerned were soft at room temperature and needed to be machined at low temperature.

US-A-3699089 (Wichterle) discloses conventional contact lens materials in which a (meth) acrylic monoester is polymerized to provide a hydrogel. A water-soluble low molecular weight cross-linking agent is used (see column 2, lines 54/55). There is no disclosure of polyunsaturation in the cross-linkers, the disclosed cross-linkers having entirely conventional levels of unsaturation. The polymers produced are sparingly cross-linked.

US-A-4276402 (Chromecek) discloses polysiloxans which have been modified by polymerization to give unexpected hydrophilic properties. The resulting copolymer is said to have a good capacity for absorption of large proportions of water and to have good mechanical properties. Polymer properties are set out in Table 1 on the page of the patent which sets forth columns 27 and 28. The sixth and seventh Examples in the Table are the Examples which contain the highest proportion of water namely, respectively, proportions of 51.5% and 60.1% of water. The values for tensile strength, tensile modulus and tear resistance are set out in columns 7, 8 and 12 of Table 1. The figures concerned translate into figures of 3.8 and 3.6 kg/$cm^2$ (tensile strength), 7.8 and 7.0 kg/$cm^2$ (tensile modulus) and 32 g/mm and 19 g/mm (tear resistance). Tensile strength and tensile modulus in the Chromecek patent was measured according to ASTM D1708.

US-A-4511646 (Fohrenkamm) discloses lithographic printing plates which are water-developable. Fohrenkamm discloses a system in which an ethylenically-unsaturated dextrin oligomer is copolymerized, the polymeric product being one essentially based on a hydroxyfunctional acrylamide monomer. Fohrenkamm thus uses a water-soluble starch-like material as oligomer and this is hydrolysable and biodegradable, features which would be highly undesirable in the context of an intraocular lens or a contact lens. Fohrenkamm does not disclose contact lenses.

US-A-4504641 (Nochumson) discloses a material for use as an electrophoresis medium. The material disclosed by Nochumson is a copolymer of acrylamide with an ethylenically unsaturated resin formed by replacing some or all of the hydroxyl hydrogen atoms in a polysaccharide with an ethylenically unsaturated group. The examples of base polysaccharide resins given in column 4 of Nochumson are all water-soluble. The materials disclosed by Nochumson are intended for use in PAGE, a technique which is in practice carried out using water-swelling. The object of Nochumson is to reduce the shrinking and cracking problems associated with the drying of PAGE materials. Drying, of course, automatically means that the gel concerned is hydrated when used as a migration medium for particles to be resolved by PAGE. The Nochumson polymer is produced in hydrated gel form by the process of production described by Nochumson at column 4, lines 43 to 46. To produce the gel in hydrated form, it must follow that an aqueous reaction medium is required. Accordingly, the buffered catalyst solution mentioned at lines 36 to 39 of column 4 in Nochumson must be an aqueous solution and the acrylamide and polysaccharide, since they are dissolved therein according to Nochumson, must therefore be water-soluble. The specific unsaturated polysaccharides disclosed by Nochumson as examples are water-soluble.

US-A-3220960 (Wichterle) discloses cross-linked hydrophilic polymers useful in contact lenses. Cross-linking is effected using low molecular weight materials. Water-solubility for the cross-linking agents is essential to the production processes disclosed and the diester cross-linkers are expressly stated to water-soluble. Wichterle does not disclose the use of polyunsaturated polymeric cross-linking agents and is not concerned with high degrees of cross-linking in the final polymer network - indeed, Wichterle specifically refers to "sparingly cross-linked" in reissue Claim 1. In the case of Example 11, for example, in column 5 of the Reissue Patent 27,401 stemming from Wichterle, polyvinyl alcohol and methacrylic acid anhydride are reacted. Only a small proportion of the methacrylic anhydride reacts with the polyvinyl alcohol, the major part of the anhydride being consumed by reaction water. In Example IV of the Wichterle reissue patent, there is essentially no unsaturation, the reaction system really being one involving two polymers which react together by esterification. Column 2 of Reissue Patent 27,401 makes it clear that the copolymer is only sparingly cross-linked.

US-A-2118197 (Daicel) discloses radiation-curable resin compositions. The compositions disclosed are described as used in printing inks and paints and Daicel addresses the need for reactive diluents which are resin-compatible on the one hand and free of undesirable effects such as odour and skin irritancy on the other. Daicel fails to disclose use in contact lenses and intraocular lenses. Daicel apparently solves the problem addressed by providing as reactive diluent a 2-hydroxyethyl(meth)acrylate modified by an epsilon-caprolactone monomer made by reacting 2-hydroxyethl(meth)acrylate with epsilon-caprolactone ring. Daicel mixes 5% to 60% wt of the above monomer with a high proportion, namely to 95% wt, of a resin. The resulting mixture is admixed with a photosensitizer such as benzoin in the proportions 100:0.1 to 10 by weight.

The resin is described as having a MW of 300 or more and as having one or more ethylenically unsaturated groups. The latter statement, of course, is no more than a statement that the resin is capable of cross-linking in poymerization with the reactive diluent. Unsaturated polyester resins are given as examples on page 1, line 45 and page 2, lines 30 et seq refer to a molecular weight range of from 300 to 5000. Consistent with this, the preceding paragraph speaks of oligomers and polymers. This last-mentioned paragraph refers also to the preferred presence of at least two ethylenic unsaturations but there is no disclosure in terms of a higher degree of unsaturation.

Intraocular lenses (IOL's) are bioimplants implanted surgically into the eye in patients whose natural crystalline lens has been surgically removed in a cataract operation.

It is of prime importance to reduce the size of the incision made in the eye during this operation. For this reason it is specially important that the IOL should possess high equilibrium water content. The higher the water content of the lens the more it would shrink on drying.

The high water content IOL could be partially dried before the cateract operation. Thus it would shrink considerably enabling a small size incision for inserting the lens into the eye. Once in position the semi-dried IOL would gain its water content from the liquids of the eye and swell back to its original parameters.

Intraocular lenses are also required to possess good mechanical properties such as high tensile strength and modulus since they are implanted as permanent prostheses which cannot easily be replaced should they suffer mechanical damage. They also need to possess improved surface properties so as to avoid deposit on the lens which could cause impairment of vision.

As in the case of the natural crystalline lens, the IOL needs to absorb UV light in the solar region (290-400nm) so as to filter this damaging light out of the human sight.

Polymers of improved modulii have now been produced which can be hydrated to form hydrogels which do not suffer deterioration of physical strength. These hydrogels may also have both improved modulii, physical strength and surface properties at the same time and the polymers may also have improved machinability and moulding properties.

According to the invention there is provided an optical ocular prosthesis comprising a biologically-acceptable moulded and/or machined body comprised of a highly cross-linked polymer, said body being in hydrated or non-hydrated form and said polymer being one which is hydrogel-forming through hydration and obtainable by copolymerization of at least one hydrophilic monomer with a cross-linking component, characterized in that the cross-linking component comprises (i) at least one water-insoluble, polyunsaturated, polymeric cross-linking agent and (ii) at least one non-polymeric cross-linking agent.

The invention also includes within its scope an optical ocular prosthesis comprising a biologically-acceptable moulded and/or machined body comprised of a highly cross-linked polymer, said body being in hydrated or non-hydrated form and said polymer being one which is hydrogel-forming through hydration and obtainable by copolymerization of at least one hydrophilic monomer with a cross-linking component, said cross-linking component comprising at least one polymeric cross-linking agent containing at least six olefinic unsaturations along its polymer chain and optionally at least one non-polymeric cross-linking having from two to five olefinic unsaturations per molecule, characterized in that the polymeric cross-linking agent comprises a water-insoluble multiply unsaturated polyester having an unsaturations content:recurring polymerized units ratio of at least 1:3.

The invention additionally includes within its scope an optical ocular prosthesis comprising a biologically-acceptable moulded and/or machined body comprised of a highly cross-linked polymer, said body being in hydrated or non-hydrated form and said polymer being on which is hydrogel-forming through hydration and obtainable by copolymerization of at least one hydrophilic monomer with a cross-linking component, said cross-linking component comprising at least one polymeric cross-linking agent and optionally at least one non-polymeric cross-linking agent, characterized in that the polymeric cross-linking agent comprises a water-insoluble derivative of a natural polymer having multiple olefinic unsaturation along its chain or a water-insoluble derivative of a synthetic polymer which is other than a polyester polymer or copolymer and which has multiple olefinic unsaturation along its chain.

In preferred embodiments of the invention, the hydrophilic monomer is a nitrogen-containing monomer, preferably a heterocyclic monomer.

Heterocyclic N-vinyl monomers are especially preferred, for example N-vinyl lactams.

Preferred N-vinyl lactams are pyrrolidone, piperidone and caprolactam derivatives, such as N-vinyl-2-piperidone, N-vinyl-2-pyrrolidone, N-vinyl caprolactam or derivatives thereof.

As an alternative to N-vinyl lactams, the heterocyclic N-vinyl monomer may be N-vinyl imidazole, N-vinyl succinamide or N-vinyl glutarimide.

Alternative nitrogen-containing monomers to the heterocyclic monomers referred to above are amido derivatives of (meth) acrylic compounds, for example a (meth) acrylamide or an N-substituted derivative thereof. Preferred are those which are mono-or-di-substituted with, for example alkyl, hydroxyalkyl or aminoalkyl or aminoalkyl substituents. Specific examples of such materials are N-methyl acrylamide, N-isopropyl acrylamide, N-diacetone acrylamide, N,N-dimethyl acrylamide, N,N-dimethylaminomethyl acrylamide, N,N-dimethylaminoethyl acrylamide, N-methylaminoisopropyl acrylamide or a methacrylamide analog of any one of the foregoing acrylamides.

The hydrophilic monomer may alternatively be any other vinyl or allyl monomer.

Examples are a monovinyl ether, a monovinyl polyether, a hydroxylated vinyl ether, an aminoalkyl (meth) acrylate, a hydroxyalkyl (meth) acrylate or an alkoxy derivative thereof.

The hydroxyalkyl (meth) acrylate may be, for example, mono-, di - or tri - hydroxylated, with the alkyl moiety

in any event preferably being of one to four carbon atoms (especially ethyl and propyl). Specific hydroxyalkyl (meth) acrylates are 2-hydroxyethyl methacrylate, hydroxypropyl acrylate, hydroxypropyl methacrylate, 2, 3-dihydroxypropyl methacrylate and their alkoxy derivatives.

The aminoalkyl (meth) acrylate may conveniently be one in which the amino group thereof is either unsubstituted or is mono- or di- alkyl substituted, for example aminoethyl (meth) acrylate, dimethylaminoethyl methacrylate, methylaminoethyl methacrylate and diethylaminoethyl methacrylate. Other (meth) acrylic acid derivatives are also envisaged.

The hydrophilic monomers are conveniently present in an amount of at least 35% by weight based on the weight of the polymer, a proportion of 50% by weight or more on the same basis being preferred. Proportions are varied depending primarily on the desired equilibrium water content of the hydrogel, proportions within the ranges specified above normally providing acceptably high water contents for hydrogels suitable for use in extended wear contact lenses according to the invention.

Whilst the polymers used in lenses according to the invention may contain low molecular weight cross-linking agents (ie monomers containing at least two olefinic bonds per molecule), it is crucial to the invention that one or more polyunsaturated polymeric cross-linking agents (ie polymers having multiple unsaturation along the polymeric backbone) are included in the hydrogel-forming polymers. The chains constituted by these polymeric cross-linking agents serve to provide reinforcement, somewhat analogously to the fibre-reinforcement provided by incorporating, for example, glass or carbon fibres in polymer compositions for other applications. They thus produce an improvement in both toughness and stiffness which facilitates production of thin and ultra-thin lenses as well as lens durability. The resilience of the hydrogel-forming polymers was also improved to enable lenses made therefrom to have high recovery speed when resiliently deformed in use (for example in the eye).

The polyunsaturated polymeric cross-linking agent (preferably present in an amount of 0.5% by weight or more) may conveniently be a polyunsaturated polyester resin of average molecular weight 1,500 to 10,000 such as 2,000 to 8,000 (eg about 3,500). The polyunsaturated polyester resin may be aliphatic or aromatic type and in particular may be a terephthalate- or isophthalate-based polyunsaturated polyester resin such as phenylterephthalate- or phenylisophthalate-containing polyunsaturated polyester resin.

Terephthalate-based resins are preferred in terms of the properties of the resulting hydrogels but isophthalate-based resins are preferred on cost grounds. Polyunsaturated polyester resins may be used as such or as a mixture in which a polyunsaturated polyester resin is dissolved in one or more monomers required in polymerization to produce the hydrogel-forming polymer.

As an alternative to polyunsaturated polyester resins, the polymeric cross-linking agent may be any unsaturated derivative of a natural or synthetic homopolymer or copolymer containing multiple functional groups along its chain, the derivative typically having an average molecular weight of 25,000 to 100,000 (eg about 50,000). Such functional groups include, for example, hydroxy, amino, carboxy, sulphonic and chloromethylene groups as well as their activated derivatives. The natural or synthetic polymers referred to may thus be, for example, polyvinyl alcohol, cellulose or a cellulose ester such as cellulose acetate, cellulose butyrate or a mixed ester such as cellulose acetate butyrate, vinyl alcohol-vinyl acetate copolymer or methylmethacrylate-2-hydroxyethylmethacrylate copolymer. Multiple pendant unsaturation produced in the above homo\co-polymers may be allyl or vinyl (eg. acrylic or methacrylic), examples of polyunsaturated polymeric cross-linking agents accordingly being cellulose acetate acrylate, cellulose acetate methacrylate, other (meth) acrylic esters of cellulose or a cellulose ester, and polyvinyl. alcohol (meth) acrylic esters.

Further alternative polyunsaturated polymeric cross-linking agents are (meth) acrylic amido derivatives of polyamines ("(meth) acrylic" used throughout means acrylic or methacrylic).

The polymeric cross-linking agent need not be a homopolymer but could be a copolymer of two or more monomers, the only requirement being that it has the requisite multiple unsaturation and, in practice, that it be soluble in the reaction mixtures used to produce the hydrogel-forming polymers of the invention. Typical unsaturation degree in the case of cellulose esters may be one to three unsaturations per recurring glucose unit (two glucose groupings have a molecular weight of 534 in the case of a typical cellulose acetate methacrylate) down to one per eight or twelve glucose units (eg one unsaturation per three to five glucose units). In the case of polyester the unsaturation is usually one per recurring unit and may be as low as one for each of two or three recurring units. Expressed as a ratio unsaturations : molecular weight typical degree of unsaturation ranges from 1:2000 or 3000 upwards (eg. 1:2000 to 1:500 or 1:200 such as 1:1000 or 1:about 300 or 350).

Any of the polymeric cross-linking agents mentioned herein, especially the polyesters, may be fluorinated (or substituted with other substituents). It has been found that, when used in fluorinated form, the polyunsaturated polymeric cross-linking agents were more efficient and provided improved machinability of the hydrogel-forming polymer and improved surface properties of the hydrogel after hydration of the hydrogel-forming

polymer.

Non-polymeric cross-linking agents which may be used in the invention in addition to polyunsaturated polymeric cross-linking agents include any monomer containing two or more olefinic unsaturations per molecule. Specific examples are ethylene glycol dimethacrylate, diethyleneglycol dimethacrylate, tri, tetra or polyethyleneglycol dimethacrylate, and also divinylbenzene, divinylethylene urea, divinypropylene urea, allyl methacrylate, trimethylol propane trimethacrylate, diallyl phthalate, fumarate or maleate, diethylene glycol bis(allyl carbonate) and ethoxylated bisphenol A dimethacrylate, or dipentaerythritol monohydroxy pentacrylate or pentamethacrylate.

The non-polymeric cross-linking agent may, of course, contain three or more olefinic unsaturations per molecule, specific examples being trimethylolpropane trimethacrylate, diallyl fumarate, dially maleate and dipentaerythritol monohydroxy penta(meth)acrylate.

In addition to the presence of hydrophilic monomers, the polymers used in lenses according to the invention may contain one or more hydrophobic monomers, usually to enable the equilibrium water content of the hydrogel to be adjusted to a predetermined level (and sometimes also to affect other properties). (Meth) acrylic alkyl esters (eg C1 - 4 alkyl esters) are typical hydrophobic monomers for use in the invention, specific examples being methyl acrylate, methyl methacrylate, ethyl acrylate and ethyl methacrylate. Other vinyl or allyl hydrophobic monomers may be used, for example vinyl esters such as vinyl acetate, vinyl propionate, styrene, styrene derivatives and maleate esters such as alkyl maleates.

The polymers used in lenses of the invention may conveniently contain a fluorinated aromatic carbocyclic monomer. These monomers have been found to enable reduction in the amount of polymeric cross-linking agent required for a hydrogel-forming polymer with particular desired strength and toughness qualities. Similarly, they improve on the machinability of the polymer and the surface properties of the hydrogels. A particularly useful class of such carbocyclic monomers are those of the general formula:-

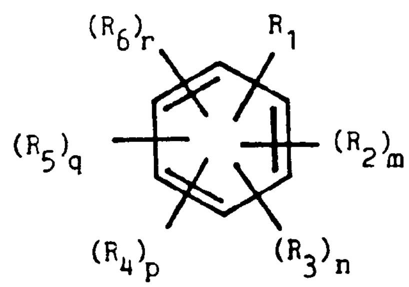

wherein $R^1$ is an optionally fluorinated unsaturated moiety, $R^2$ is fluorine, $R^3$ to $R^6$ each represent identical or different substituents, $\underline{n}$ to $\underline{r}$ are, each independently, zero or one, $\underline{m}$ is zero or an integer up to a value 5-($\underline{n}$+$\underline{p}$+$\underline{q}$+$\underline{r}$) with the proviso that $\underline{m}$ is zero only when $R^1$ is a fluorinated unsaturated moiety. The monomer may, for example, be di-, tri- or penta-fluorinated on the aromatic ring.

$R^1$ may be an ethylenically unsaturated optionally halogenated hydrocarbon moiety of, for example, 2 to 6 carbon atoms, for example, optionally halogenated vinyl, allyl or homologue thereof.

$R^3$ to $R^6$ may be indentical or different substituents other than fluorine (eg other halogen substituents or hydrocarbon substituents such as alkyl groups of, for example, 1 to 4 carbon atom).

In an embodiment of the invention, the carbocyclic monomer is one in which $R^1$ is a fluorinated ethylenically unsaturated hydrocarbon moiety and $\underline{m}$ to $\underline{r}$ are zero.

The fluorinated carbocyclic monomer may in particular be a fluorinated styrene (including at least parafluoro substitution), penta fluoro styrene being preferred.

As mentioned above, the fluorinated carbocyclic monomer enables a desirable level of strength and toughness to be achieved with decreased contents of polymeric cross-linking agent, although this is generally to some extent at expense of tensile modulus or recovery speed. It will thus be appreciated that the capacity to vary the amount and type of both the polymeric cross-linking agent and the fluorinated monomer represents a tool by means of which the polymer can be produced with tailored mechanical properties. In addition to mechanical properties, optical properties can similarly be varied and, moreover, the fluorinated monomer has been found to improve the surface properties of lenses made from polymers according to the invention. This obviously has an influence on the tendency of the lens to suffer surface soiling, thus providing another factor determining the use of the flurinated monomers. The fluorinated monomer also improves casting of the polymer to a lens configuration (an aspect of surface property improvement) and hard polymer machinability.

The fluorinated carbocyclic monomer is conveniently used in an amount of not more than 25% by weight of all the materials used to form the polymer, a preferred proportion being 15% or less. The most preferred

range of proportion is 0.5% to 10% (eg 3% to 10%).

UV light has long been recognized to be hazardous to human sight. This is especially so after a cataract operation when the natural crystalline lens with its capacity to filter UV light in the solar region (wavelengths 290 - 400nm) has been removed.

It is thus generally desirable for intraocular lenses to absorb UV light in the same region and this is equally desirable in the case of the polymer materials used in intraocular lenses according to the present invention.

To prevent leaching out, it is preferred that the polymer should contain UV-absorbing components polymerized\ chemically bound therein. For example, the polymer may include at least one monomer containing a UV-absorbing moiety which in the final polymer network will be located as a side group attached to the polymer backbone so as to be bound inextractable UV-absorber. The UV-absorbing monomer, which may be used in small amounts, eg 0.1 to 10% (preferably 0.1 to 2%) by weight of the materials used to form the polymer, may be a monoethylenically unsaturated monomer, for example 4-benzoyl-3-hydroxy phenyl(meth)acrylate or the corresponding triazole derivative. Alternatively, the UV-absorbing moiety may be part of a cross-linking monomer. Cross-linking agents which are oligomeric may also be used in incorporate UV-absorbing components into the polymer structure. Residues of chromophores such as the following may be employed to provide the UV-absorbing moieties, namely hydroxybenzophenones and benzotriazoles such as 2-hydroxybenzophenone; 2,4-dihydroxybenzophenone; 2,2′,4-trihydroxybenzophenone; 2,2′,4,4′-tetrahydroxy benzophenone; 2-(2H-benzotriazol-2-yl) phenol; or derivatives thereof.

Alternatively, the chromophone may be UV-absorbing substituted cinnamic acid or a derivative thereof.

The chromophore may also be a derivative of phenyl or other aryl esters capable of photo-Fries re-arrangement to form 2-hydroxybenzophenone derivatives bound in the polymer, for example resorcinol monobenzoate, phenyl salicylate, diaryl terephthalate, diaryl isophthalate or their derivatives.

It has been found that certain of the polymeric cross-linking agents referred to earlier possess UV-absorption characteristics in the solar region. Thus, for example, terephthalate- and isophthalate-based polyunsaturated polyester resins possess UV-absorption maxima in the solar range. Phenyltherephthalate-containing and phenyl-isophthalate-containing polyunsaturated polyester resins undergo Fries re-arrangement on exposure to UV-radiation to form 2-hydroxybenzophenone which functions as a UV-absorption moiety bound in the structure of the hydrogel-forming polymer. The Fries re-arrangement is illustrated below:-

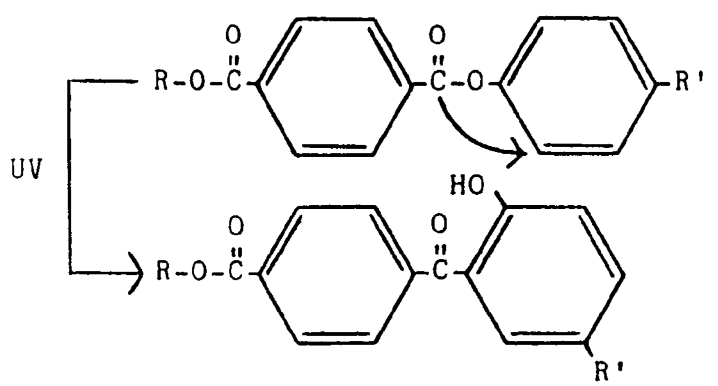


It will be appreciated that UV-absorbing moieties bound in the polymer structure as mentioned above are of advantage since the UV-absorbing components are not leached from the polymer in the optical environment and therefore there is no loss of UV-absorbing properties and no risk of toxic effects due to materials leaching into the eye.

The polymers used in lenses according to the invention may be prepared by radiation polymerizations or by heating a polymerization mixture in the presence of one or more chemical initiators.

In the case of radiation polymerization, the radiation will perferably be ionizing gamma-radiation, for example from a cobalt 60 source. Other forms of radiation, such as electron beams and photon beams, may however, be used as an alternative.

Examples of chemical initiators are those which generate free radials, such as hydroperoxides or organic peroxides such as the benzoyl peroxide, a percarbonate such as di-isopropyl percarbonate or di-cyclohexyl percarbonate, a redox system or an azo compound such as azobisisobutyronitrile.

Heating at temperatures in the range of 30-95°C is generally suitable to polymerise the mixture. It is desirable to conduct the heating in a cycle, ie in a series of stages at increasing temperatures, the early stages (30-60°C) being conveniently carried out in a water bath or oven, while the later stages may be preferably carried out in an oven; the last stage is a post-cure treatment and may be conducted at 85-95°C possibly under vacuum.

Apart from monomers, cross-linking agents and any required initiators, the monomer mixture may contain one or more solvents to help dissolve the polymers or monomers, or to affect one or more of the physical and mechanical properties of the final product.

The polymerisation is preferably effected in a mould. The mould will conveniently take the final shape or a desired article or may be as close as possible to it, so that subsequent machining is either not necessary or is minimized. The mould may also provide a simple shape eg a rod or sheet which could be used to provide blanks. The blanks may then be machined to produce a desired article such as a contact lens or an intraocular lens.

Because the hydrogel-forming polymers used in the lenses of the present invention are suitable for use in contact with living tissue, they are suitable in intraocular lenses as well as contact lenses of various thickness (eg thick, thin or ultra thin), particularly since they combine flexibility with improved tensile modulus and adequate toughness. They are particularly suitable for making into intraocular lenses as they can be made to possess any required equilibrium water content and to absorb UV light in the solar region. Dyes may be incorporated in the monomer mix before polymerisation or may be used to colour the soft article at a later stage. Pharmaceutically effective substances may be incorporated into the microporous structure of the polymers and then be released into the human body on a controlled slow-release basis. For example, the polymers according to this invention may be formed into a bandage lens for an eye and drugs such as antibiotic substances may be incorporated into the lens for gradual diffusion into the eye.

As will be appreciated from the Examples which follow, one class of preferred polymers for use in lenses according to the invention comprises (i) methyl methacrylate, (ii) ethoxy- lated bisphenol A dimethacrylate, (iii) polyethylene glycol dimethacrylate, (iv) allyl methacrylate, (v) 2-hydroxyethyl methacrylate, (vi) cellulose acetate methacrylate, (vii) diacetone acrylamide and (viii) N-vinyl pyrrolidone in the preferred by weight amounts 30 parts (i), 0.3 parts (ii), 0.25 parts (iii), 0.25 parts (iv), 2.5 parts (v), 1.5 parts (vi), 0.25 parts (vii) and 65 parts (viii).

The invention in particular provides lenses formed of cross-linked hydrogel-forming polymers comprising a fluorinated aromatic carbocyclic monomer and such a proportion of such a strongly hydrophilic comonomer that a body of a hydrogel formed by hydration thereof has an equilibrium water content at 20°C of preferably more than 50%, especially more than 60%. As a preferred such contact lens for extended wear, the lens has a thickness and water content such that its oxygen transmissibility on the Fatt scale is a least $200x10^{-10}$(cm\sec) (ml\$O_2$ ml x mm Hg) at 35°C.

The polymer preferably includes units containing a UV-absorbing moiety, conveniently one which in the final polymer network is bound as part of the polymer structure, and this is, of course, described earlier.

The units containing UV-absorbing moiety may be monomer units or molecules of an oligomeric or polymeric cross-linking agent. The monomer units may be units of a comonomer or a monomeric cross-linking agent. The monomer units may contain any of the chromophores specified earlier, in particular a chromophore which undergoes photo-Fries re-arrangement on exposure to UV-radiation to form a re-arrangement product which absorbs UV-radiation, such as an aryl ester which undergoes UV-Fries re-arrangement to form 2-hydroxybenzophenone derivatives bound in the polymer.

In the following specific Examples, Examples 1 to 7, 11 and 12 are intended to illustrate lenses of the invention whilst Examples 8 to 10 illustrate production and properties of discs made of similar polymeric material and Examples 13 and 14 illustrate production of polyunsaturated polymeric cross-linking agents.

In the Examples, MW means the approximate weight average molecular weight. Degree of unsaturation is expressed as number of unsaturations per segment of molecular weight 1000 and is necessarily approximate.

## Example 1

A mixture of 10g freshly distilled pentafluorostyrene, 17.6g freshly distilled methyl methacrylate, 0.2g diallyl phthalate, 0.2g diallyl maleate and 7g of purified cellulose acetate acrylate of Example 14 (MW=50,000; degree of unsaturation =1\1000) was thoroughly shaken then dissolved in 165g of N-vinyl-2-pyrrolidone. Then 0.4g azobisisobutyronitrile was added and the solution was thoroughly mixed filtered and degassed under vacuum. Part of it was then sealed in a low density polythene tube. The tube was subjected to a heating cycle of 40hrs at 40°C, 6hrs at 60°C and 16hrs at 90°C and then left to cool slowly to room temperature. Discs of lmm thickness were machined from the hard plymer produced by the above method and then immersed in normal saline at 20°C for hydration until reaching equilibrium (3-7 days). The equilibrium water content was 70.5% and the hydrated discs were clear, tough and flexible with high tensile modulus.

The rest of the polymerisation mixture was cast into films between glass plates, sealed with silicon rubber gaskets and then subjected to the same heating cycle as above. The glass plates were then opened and the hard film was hydrated as before. Similarly, the equilibrium water content was 70.5% and the mechanical properties of the hydrated film were measured using ASTM D6 38-77a and D1004-66 for tensile properties and initial tear resistance, respectively. The tensile modulus at 40% strain was 19.5kg\cm$^2$, the tensile strength 19kg\cm$^2$ and the initial tear resistance was 400g\mm.

Discs of the material could be machined into contact lenses thinner than 0.1mm in their hydrated state, allowing an oxygen transmissibility on the Fatt scale of more than 360 x $10^{-10}$ (cm\sec) (ml $O_2$\ml x mm Hg) at 35°C.

Example 2

A mixture of 10g freshly distilled pentafluorostyrene, 13.6g freshly distilled methyl methacrylate, 0.2g diallyl phthalate, 0.2g diallyl maleate, 2g of Scott-Bader Crystic 191LV, a commercial, clear isophthalate based polyunsaturated polyester resin (which contains 36% styrene; MW=3,500; degree of unsaturation =1\363 and 7g of purified cellulose acetate acrylate referred to in Example 1, was thoroughly shaken and then dissolved in 167g of N-vinyl-2-pyrrolidone. Then 0.4g azobisisobutyronitrile was added and the solution was thoroughly mixed, filtered and degassed under vacuum. Part of it was then sealed in a low density tube. The tube was subjected to a heating cycle of 40hrs at 40°C, 6hrs at 60°C and 16hrs at 90°C and then left to cool slowly at room temperature. Discs of lmm thickness were machined from the hard polymer obtained by the above procedure and then immersed in normal saline at 20°C for hydration until reaching equilibrium (3-7 days). The equilibrium water content was 70.2% and the hydrated discs were clear, stiffer than those of Example 1; however they were still tough and flexible. The hydrated discs showed UV absorption bands between 190 to 300nm.

The rest of the polymerisation mixture was cast into films between glass plates, sealed with silicon rubber gaskets and then subjected to the same heating cycle as above. The glass plates were then opened and the hard film was hydrated as before, giving rise to the same equilibrium water content. The mechanical properties of the hydrated films were measured as in Example 1. The tensile strength was 15kg\cm$^2$ and the initial tear resistance was 320g\mm.

Discs of the material could be machined into contact lenses thinner than 0.1mm in their hydrated state, allowing an oxygen transmissibility on the Fatt scale of more than 360 x $10^{-10}$ (cm\sec) (ml $O_2$\ml x mm Hg) at 35°C.

Example 3

A mixture of 1.6g freshly distilled pentafluorostyrene, 3.3g freshly distilled methyl methacrylate, 0.02g diallyl phthalate, 0.02g diallyl meleate, 0.06g ethyoxylated bisphenol A dimethacrylate, 0.8g of the isophthalate-based polyunsaturated polyester resin referred to in Example 2 and 0.8g of purified cellulose acetate methacrylate of Example 13 (MW=50,000; degree of unsaturation =1\1000) was thoroughly shaken and then dissolved in 33.4g of N-vinyl-2-pyrrolidone. Then 0.08g azobisisobutyronitrile was added and the solution was thoroughly mixed, filtered and degassed under vacuum, and then sealed in a low density polythene tube. The tube was subjected to a heating cycle of 40hrs at 43°C, 6hrs at 60°C and 16hrs at 90°C and then left to cool slowly to room temperature. Discs of lmm thickness were machined from the hard polymer obtained by the above procedure and then immersed in normal saline at 21°C for hydration until reaching equilibrium (3-7 days). The equilibrium water content was 74.2% and the hydrated discs were clear, stiff yet tough and flexible. In addition, the hydrated discs showed strong UV absorption bands in the solar region, between 190 to 300nm.

Discs of the material could be machined into contact lenses thinner than 0.06mm in their hydrated state, allowing an oxygen transmissibility on the Fatt scale of more than 420 x $10^{-10}$ (cm\sec) (ml $O_2$\ml x mm Hg) at 35°C.

Example 4

A mixture of lg freshly distilled pentafluorostyrene, 3.5g freshly distilled methyl methacrylate, 0.1g diallyl phthalate, 0.75g of the isophthalate-based polyunsaturated polyester resin referred to in Example 2, 1.5g of purified cellulose acetate methacrylate of Example 3 and 0.05g of 4-benzoyl-3-hydroxyphenyl methacrylate was thoroughly shaken and then dissolved in 43.1g of N-vinyl-2-pyrrolidone. 0.1g of azobisisobutyronitrile was then added and the solution was thoroughly mixed, filtered and degassed under vacuum, and then sealed in a low density polythene tube. The tube was subjected to a heating cycle of 40hrs at 40°C, 6hrs at 60°C and 16hrs at 90°C and then left to cool slowly to room temperature. Discs of lmm thickness were machined from

the hard polymer thus produced and then immersed in normal saline at 20°C for hydration until reaching equilibrium (3-7 days). The equilibrium water content was 78% and the hydrated discs were still tough and stiff enough for their high water content. The hydrated discs, after extraction with ethanol (3 times over night) and boiling in distilled water for 8hrs, still absorbed UV light in the solar region indicating the presence of a bound UV absorber in the hydrogel.

Discs of the material could be machined into contact lenses thinner than 0.2mm in their hydrated state, allowing an oxygen transmissibility on the Fatt scale of more than 250 x $10^{-10}$ (cm\sec) (ml $O_2$\ml x mm Hg) at 35°C.

Example 5

A mixture of 6g freshly distilled methylmethacrylate, 0.1g diallyl phthalate, 0.75g of the polyunsaturated polyester resin of Example 2 and 1.5g of the purified cellulose acetate methacrylate of Example 3 was thoroughly shaken and then dissolved in 41.65g of N-vinyl-2-pyrrolidone. 0.1g of azobisobutyronitrile was then added and the solution was thoroughly mixed, filtered and degassed under vacuum and sealed in a low density polythene tube. The tube was subjected to a heating cycle of 40hrs at 40°C, 6hrs at 60°C and 16hrs at 90°C and then left to cool slowly to room temperature. Discs of lmm thickness were machined from the hard polymer thus produced and then immersed in normal saline at 20°C for hydration until reaching equilibrium (3-7 days). The equilibrim water content was 78% and the hydrated discs were tough and stiff enough for such a high water content. They also showed UV absorption bands between 190 to 300nm.

Discs of the material could be machined into contact lenses thinner than 0.2mm in their hydrated state, allowing an oxygen transmissibility on Fatt scale of more than 250 x $10^{-10}$ (cm\sec) (ml $O_2$\ml x mm Hg) at 35°C.

Example 6

A solution of 1.12g of the solid isophthalate based polyunsaturated polyester resin referred to in Example 2 but dissolved in 14g freshly distilled methly methacrylate, 0.15g ethoxylated bisphenol A dimethacrylate, 0.1g diallyl maleate and 1.25g 2-hydroxyethylmethacrylate was added to a mixture of solids which contained 0.75g cellulose acetate methacrylate of Example 3 and 0.12g diacetone acrylamide, thoroughly shaken and then dissolved in 32.51g of N-vinyl-2-pyrrolidone. 0.1g of azobisisobutyronitrile was then added and the solution was thoroughly mixed, filtered and degassed under vacuum, and then sealed in a low density polythene tube. The tube was subjected to a heating cycle of 40hrs at 40°C, 6hrs at 60°C and 16hrs at 90°C and then left to cool slowly to room temperature. Discs of 1mm thickness were machined from the hard polymer thus produced and then immersed in normal saline at 20°C for hydration until reaching equilibrium (3-7 days). The equilibrium water content was 60% and the hydrated discs were clear, stiff, tough yet still flexible. They also showed strong UV absorption bands between 190 and 300 nm and this property remained after attempting absorber extraction in boiling water and organic solvents.

Discs of the material could be machined into contact lenses thinner than 0.1mm in their hydrated state, allowing an oxygen transmissibility on the Fatt scale of more than 250 x $10^{-10}$ (cm\sec) (ml $O_2$\ml x mm Hg) at 35°C.

Example 7

A solution of 1.12g of the solid isophthalate-based polyunsaturated polyester resin of Example 6 in 13.96g freshly distilled methyl methacrylate, 0.15g ethoxylated bisphenol A dimethacrylate, 0.1g diallyl maleate and 1.25g 2-hydroxyethly methacrylate, was added to a mixture of solids which contained 0.75g cellulose acetate methacrylate of Example 3, 0.12g diacetone acrylamide and 0.05g 4-benzoyl-3-hydroxyphenyl methacrylate, thoroughly shaken and then dissolved in 32.5g of N-vinyl-2-pyrrolidone. 0.1g of azobisisobutyronitrile was then added and the solution was thoroughly mixed, filtered and degassed under vacuum, and then sealed in a low density polythene tube. The tube was subjected to a heating cycle of 40 hrs at 40°C, 6hrs at 60°C and 16hrs at 90°C and then left to cool slowly to room temperature. Discs of lmm thickness were machined from the hard polymer thus produced and then immersed in normal saline at 20°C for hydration until reaching equilibrium (3-7 days). The equilibrium water content was 59% and the hydrated discs were clear, stiff, tough yet flexible and capable of absorbing UV in the solar region, after extractions with ethanol, ether and boiling water.

Discs could be machined into contact lenses with similar dimensions and properties to those of Example 6.

Example 8

0.75g of the purified cellulose acetate methacrylate of Example 3 and 0.5g of crystallised diacetone acrylamide was added to a mixture of 12.6g of freshly distilled methyl methacrylate, 0.15g ethoxylated bisphenol A dimethacrylate, 0.13g polyethylene glycol dimethacrylate, 0.12g allyl methacrylate and 5g 2-hydroxyethyl methacrylate, and was throughly shaken. It was then dissolved in 30.75g of N-vinyl-2-pyrrolidone, filtered and degassed under vacuum, and then sealed in a low density polythene tube. The tube was subjected to a dose of 2.5 MegaRads of ionising radiation from a Cobalt 60 source. Discs of lmm thickness were machined from the hard polymer thus produced and then immersed in normal saline at 20°C for hydration until reaching equilibrium (3-7 days). The equilibrium water content was 63% and the hydrated discs were flexible, stiff yet tough and clear.

Example 9

A solution of 0.48g the isophthalate based polyunsaturated polyester resin of Example 2 in 0.27g styrene was added to a mixture of 20g purified 2-hydroxyethyl methacrylate, 8.95g freshly distilled methyl methacrylate, 0.1g ethoxylated bisphenol A dimethacrylate, 0.1g diallyl phthalate, 0.1g diallyl maleate, lg purified diacetone acrylamide and 19g N-vinyl-2-pyrrolidone. The mixture was shaken and 0.1g of azobisisobutyronitrile was added. The solution was then thoroughly mixed, filtered and degassed under vacuum and sealed in a low density polythene tube. The tube was subjected to a heating cycle the same as that of Example 7 above then to cool slowly to room temperature. Discs of 1mm thickness were machined from the hard polymer obtained and hydrated in normal saline at 20°C until equilibrium (3-7 days). The equilibrium water content was 42.7% and the hydrated discs were resilient, stiff and yet tough. The discs also showed UV absorption bands between 190 to 300nm.

Example 10

A solution of 12.6g of freshly distilled methyl methacrylate, 0.15g ethoxylated bisphenol A dimethacrylate, 0.13g polyethylene glycol dimethacrylate, 0.12g allyl methacrylate and 5.0g 2-hydroxyethyl methacrylate was added to a mixture of 0.75g of the purified cellulose acetate methacrylate of Example 3 and 0.5g diacetone acrylamide. The whole mixture was shaken and then dissolved in 30.75g of N-vinyl-2-pyrrolidone. 0.1g of azobisisobutyronitrile was added and the solution was thoroughly mixed, filtered and degassed under vacuum and sealed in a low density polythene tube. The tube was subjected to a heating cycle of 40hrs at 40°C, 6hrs at 60°C and 16hrs at 90°C and then left to cool slowly to room temperature. Discs of lmm thickness were machined from the hard polymer thus produced and then immersed in normal saline at 20°C for hydration until reaching equilibrium (3-7 days). The equilibrium water content was 60.0% and the hydrated discs were flexible yet stiff, tough and clear.

Example 11

A solution of 15.375g freshly distilled methyl methacrylate, 0.15g ethoxylated bisphenol A dimethacrylate, 0.125g polyethylene glycol dimethacrylate, 0.125g allyl methacrylate and 1.25g 2-hydroxyethly methacrylate was added to a mixture of 0.75g of the purified cellulose acetate methacrylate of Example 3 and 0.125g diacetone acrylamide. The whole mixture was shaken and then dissolved in 32.1g of N-vinyl-2-pyrrolidone. 0.1g of azobisisobutyronitrile was added and the solution was thoroughly mixed, filtered and degassed under vacuum and sealed in a low density polyethylene tube. The tube was subjected to a heating cycle of 40hrs at 40°C, 6hrs at 60°C and 16hrs at 90°C and then left to cool slowly to room temperature. Discs of lmm thickness were machined from the hard polymer thus produced and then immersed in normal saline at 20°C for hydration until reaching equilibrium (3-7 days). The equilibrium water content was 60.5% and the hydrated discs were stiff, tough and clear. It was found to be suitable for the production of soft intraocular lenses.

Example 12

Plano lenses of hydrated parameters of 9.0 mm in radius, 14.5 mm in diameter and 0.2 mm in thickness were manufactured from the polymer of Example 10. They were thoroughly cleaned, sterilized and then soaked in preservative-free 1% pilocorpine hydrochloride solution for 2hrs. Then the lenses were used to treat the eyes of patients who suffer from acute closed-angled glaucoma. The presoaked lenses released in the eye over 90% of the pilocorpine in 4.0hrs and reduction of the intraocular pressure was obtained.

Example 13

1.25 litres petroleum ether 40-60 is placed in a 3 litre round flask in a fume cupboard. 100g of freshly distilled methacryloyl chloride is added and the mixture is thoroughly stirred. 500g of cellulose acetate (Eastman Kodak No.4650) is now added slowly, while stirring constantly. Then the flask is sealed, covered and left to stand at room temperature overnight. The mixture is then refluxed for 8hrs at 45°C, sealed and cooled in the fridge overnight. The solid is subsequently transferred into a thimble placed beforehand in a fume cupboard and extracted with ether in a soxhlet for three days, 8hrs a day. 200g of granulated NaOH is placed in the flask of the soxhlet to decompose the acid chloride and to convert the organic acid formed into its solid sodium salt:

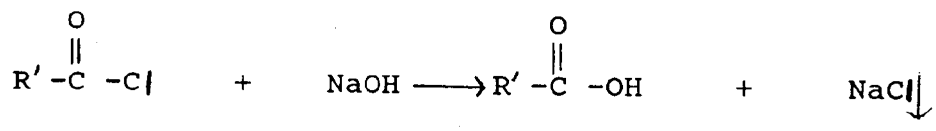

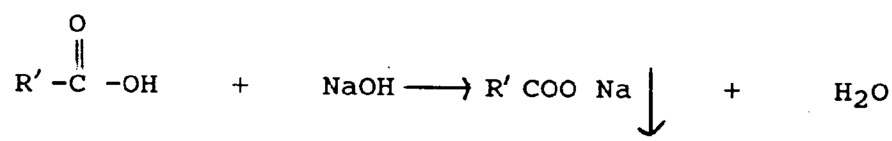

The solids are removed every day together with the ether and replaced by new portions of NaOH (200 g) and diethyl ether. In the fourth day the cellulose acetate methacrylate is placed between layers of filter paper in the fume cupboard for 5 to 6 hours in order to evaporate the ether. The resulting dry powder is then sieved in a 50 mesh sieve, placed in a dark bottle and kept in the freezer.

Example 14

100g of freshly distilled acryloyl chloride and 500g of cellulose acetate are added one by one through constant stirring to 1.25 litres of petroleum ether 40-60 as in Example 13. The flask is then sealed and placed in the fridge for one week. The solid is subsequently transferred into a thimble and extracted with ether in a soxhlet for three days as in Example 13. In the fourth day the cellulose acetate acrylate thus formed is dried between sheets of filter paper, sieved and bottled as before (Example 13).

## Claims

### Claims for the following Contracting States : FR, DE, NL, GB

1. An optical ocular prosthesis comprising a biologically-acceptable moulded and/or machined body comprised of a highly cross-linked polymer, said body being in hydrated or non-hydrated form and said polymer being one which is hydrogel-forming through hydration and obtainable by copolymerization of at least one hydrophilic monomer with a cross-linking component, characterized in that the cross-linking component comprises (i) at least one water-insoluble, polyunsaturated, polymeric cross-linking agent and (ii) at least one non-polymeric cross-linking agent.

2. A prosthesis as claimed in Claim 1 wherein the unsaturation of the polymeric cross-linking agent is vinyl or allyl unsaturation.

3. A prosthesis as claimed in Claim 1 wherein the unsaturation of the polymeric cross-linking agent is (meth) acrylic.

4. A prosthesis as claimed in Claim 2 wherein the polyunsaturated polymeric cross-linking agent is a polyunsaturated polyester resin.

5. An optical ocular prosthesis comprising a biologically-acceptable moulded and/or machined body comprised of a highly cross-linked polymer, said body being in hydrated or non-hydrated form and said polymer

being one which is hydrogel-forming through hydration and obtainable by copolymerization of at least one hydrophilic monomer with a cross-linking component, said cross-linking component comprising at least one polymeric cross-linking agent and optionally at least one non-polymeric cross-linking agent having from two to five olefinic unsaturations per molecule, characterized in that the polymeric cross-linking agent comprises a water-insoluble multiply unsaturated polyester having an unsaturations content:recurring polymerized units ratio of at least 1:3.

6. A prosthesis as claimed in Claim 4 or Claim 5 wherein the polyunsaturated polyester resin is an aliphatic or an aromatic-based polyunsaturated polyester resin or a mixture thereof.

7. A prosthesis as claimed in Claim 6 wherein the polyunsaturated polyester resin is a terephthalate or isophthalate-based polyunsaturated polyester resin.

8. A prosthesis as claimed in Claim 7 wherein the polyunsaturated polyester resin is a phenylisophthalate-containing or phenylterephthalate-containing polyunsaturated polyester resin.

9. An optical ocular prosthesis comprising a biologically-acceptable moulded and/or machined body comprised of a highly cross-linked polymer, said body being in hydrated or non-hydrated form and said polymer being one which is hydrogel-forming through hydration and obtainable by copolymerization of at least one hydrophilic monomer with a cross-linking component, said cross-linking component comprising at least one polymeric cross-linking agent and optionally at least one non-polymeric cross-linking agent, characterized in that the polymeric cross-linking agent comprises a water-insoluble derivative of a natural polymer having multiple olefinic unsaturation along its chain or a water-insoluble derivative of a synthetic polymer which is other than a polyester homopolymer or copolymer and which has multiple olefinic unsaturation along its chain.

10. A prosthesis as claimed in Claim 9 wherein the natural or synthetic polymer is polyvinyl alcohol, cellulose, a cellulose ester, vinyl alcohol-vinyl acetate copolymer or methylmethacrylate-2-hydroxyethylmethacrylate copolymer.

11. A prosthesis as claimed in Claim 10 wherein the polymeric cross-linking agent is a (meth) acrylic ester of polyvinyl alcohol or a (meth) acrylic ester of cellulose or of a cellulose ester.

12. A prosthesis as claimed in Claim 11 wherein the (meth) acrylic ester of cellulose or of a cellulose ester is cellulose (meth) acrylate, cellulose acetate (meth) acrylate, cellulose butyrate (meth) acrylate or cellulose acetate butyrate (meth) acrylate.

13. A prosthesis as claimed in Claim 10 wherein the polymeric cross-linking agent is a (meth) acrylic amido derivative of a polyamine.

14. A prosthesis as claimed in any preceding claim wherein the polyunsaturated polymeric cross-linking agent contains fluorine.

15. A prosthesis as claimed in any preceding claim wherein the polymeric cross-linking agent is present in an amount of not more than 20% based on the weight of the hydrogel-forming polymer.

16. A prosthesis as claimed in any preceding claim and containing a non-polymeric cross-linking agent containing three or more unsaturations per molecule.

17. A prosthesis as claimed in any one of Claims 1 to 15 wherein the non-polymeric cross-linking agent is ethylene glycol dimethacrylate, divinyl benzene, divinylethylene urea, divinylpropylene urea, allyl methacrylate, diallylphthalate, diethyleneglycol bis(allylcarbonate), ethoxylated bisphenol A dimethacrylate, trimethylol propane trimethacrylate, diallyl fumarate, diallyl maleate, dipentaerythritol monohydroxy pentacrylate or pentamethacrylate or di, tri-, tetra- or polyethyleneglycol dimethacrylate.

18. A prosthesis as claimed in any preceding claim wherein the hydrophilic monomer is a nitrogen-containing monomer.

**19.** A prosthesis as claimed in any preceding claim wherein the hydrophilic monomer is a vinyl monomer.

**20.** A prosthesis as claimed in any preceding claim wherein the hydrophilic monomer is a ring saturated or ring unsaturated heterocyclic vinyl monomer.

**21.** A prosthesis as claimed in any preceding claim wherein the hydrophilic monomer is a heterocyclic N-vinyl monomer.

**22.** A prosthesis as claimed in Claim 21 wherein the heterocyclic N-vinyl monomer is an N-vinyl lactam.

**23.** A prosthesis as claimed in Claim 22 wherein the N-vinyl lactam is a pyrrolidone, piperidone or caprolactam derivative.

**24.** A prosthesis as claimed in Claim 22 or Claim 23 wherein the N-vinyl lactam is N-vinyl-2-pyrrolidone, N-vinyl-2-piperidone, N-vinyl caprolactam or a derivative thereof.

**25.** A prosthesis as claimed in Claim 21 wherein the heterocyclic N-vinyl monomer is N-vinyl imidazole, N-vinyl succinamide or N-vinyl glutarimide.

**26.** A prosthesis as claimed in Claim 18 wherein the nitrogen-containing monomer is an amido derivative of a (meth) acrylic compound.

**27.** A prosthesis as claimed in Claim 26 wherein the amido derivative is a (meth) acrylamide compound or an N-substituted derivative thereof.

**28.** A prosthesis as claimed in Claim 26 or Claim 27 wherein the amido derivative is N-methyl acrylamide, N-isopropyl acrylamide, N-diacetone acrylamide, N,N-dimethyl acrylamide, N,N-dimethylaminomethyl acrylamide, N,N- dimethylaminoethyl acrylamide, N-methylaminoisopropyl acrylamide or a methacrylamide analog of any one of the foregoing, acrylamides.

**29.** A prosthesis as claimed in any one of Claims 1, 5 and 9 wherein the hydrophilic monomer is a monovinyl ether, a monovinyl polyether, a hydroxylated vinyl ether, an aminoalkyl (meth) acrylate, a hydroxyalkyl (meth) acrylate or an alkoxy derivative thereof.

**30.** A prosthesis as claimed in any preceding claim wherein the hydrophilic monomer(s) constitutes at least 35% by weight based on the weight of the hydrogel-forming polymer.

**31.** A prosthesis as claimed in Claim 30 wherein the hydrophilic monomer(s) constitutes at least 50% by weight based on the weight of the hydrogel-forming polymer.

**32.** A prosthesis as claimed in any preceding claim and containing one or more hydrophobic comonomers.

**33.** A prosthesis as claimed in Claim 32 wherein the hydrophobic comonomer is styrene, a vinyl ester, a maleate ester or an alkyl (meth) acrylate.

**34.** A prosthesis as claimed in any preceding claim and containing a UV-absorber.

**35.** A prosthesis as claimed in Claim 34 wherein the UV-absorber is a UV-absorbing monomer copolymerized in the polymer structure.

**36.** A prosthesis as claimed in Claim 35 wherein the UV-absorbing monomer is a monomer containing one of the following chromophores, namely a residue of 2-hydroxybenzophenone; 2,4-dihydroxybenzophenone; 2,2′,4-trihydroxybenzophenone; 2,2′,4,4′-tetrahydroxybenzophenone; 2-(2H-benzotriazol-2-yl) phenol; resorcinol monobenzoate; phenyl salicylate; diaryl terephthalate; diaryl isophthalate or a derivative thereof; or UV-absorbing substituted cinnamic acid or a derivative thereof.

**37.** A prosthesis as claimed in Claim 35 or Claim 36 wherein the UV-absorbing monomer is a non-polymeric cross-linking agent.

**38.** A prosthesis as claimed in any preceding claim and containing a fluorinated aromatic carbocyclic monomer.

**39.** A prosthesis as claimed in Claim 38 wherein the fluorinated monomer is of the general formula:-

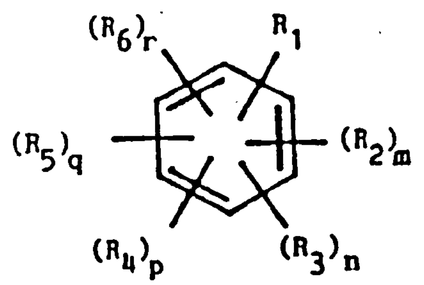

wherein $R_1$ is an optionally fluorinated, unsaturated moiety, $R_2$ is fluorine, $R_2$ to $R_6$ each represent identical or different substituents, n to r are, each independently, zero or one, m is zero or an integer up to a value 5-(n+p+q+r) with the proviso that m is zero only when $R_1$ is a fluorinated unsaturated moiety.

**40.** A prosthesis is claimed in Claim 39 wherein $R_1$ is a fluorinated ethylenically unsaturated hydrocarbon moiety and m to r are zero.

**41.** A prosthesis is claimed in Claim 39 or Claim 40 wherein the fluorinated monomer is a fluorinated styrene.

**42.** A prosthesis is claimed in Claim 41 wherein the fluorinated monomer is di-, tri-, tetra- or penta-fluorinated on the aromatic ring.

**43.** A prosthesis is claimed in Claim 41 or Claim 42 wherein the fluorinated monomer is pentafluorostyrene.

**44.** A prosthesis is claimed in any one of Claims 39 to 43 wherein the fluorinated monomer is present in an amount of not more than 25% by weight based on the weight of the polymer.

**45.** A prosthesis is claimed in Claim 44 wherein the fluorinated monomer is present in an amount of from 0.5% to 10% by weight based on the weight of the polymer.

**46.** A prosthesis as claimed in Claim 9 and comprising methyl methacrylate, ethoxylated bisphenol A dimethacrylate, polyethylene glycol dimethacrylate, allyl methacrylate, 2-hydroxyethyl methacrylate, cellulose acetate methacrylate, diacetone acrylamide and N-vinyl pyrrolidone.

**47.** A prosthesis as claimed in Claim 46 wherein the N-vinyl-2-pyrrolidone constitutes 65 parts by weight based on the weight of the polymer.

**48.** An optical ocular prosthesis as claimed in Claim 46 wherein the polymer is made by copolymerizing a mixture having the following composition by weight:-

| | | |
|---|---|---|
| methyl methacrylate | 30 | parts |
| ethoxylated bisphenol A dimethacrylate | 0.3 | parts |
| polyethylene glycol dimethacrylate | 0.25 | parts |
| allyl methacrylate | 0.25 | parts |
| 2-hydroxyethyl methacrylate | 2.5 | parts |
| purified cellulose acetate methacrylate | 1.5 | parts |
| diacetone acrylamide | 0.25 | parts |
| N-vinyl-2-pyrrolidone | 65 | parts |

**49.** A prosthesis as claimed in any one of Claims 46 to 48 wherein the cellulose acetate methacrylate is a polymeric polyunsaturated cross-linking agent having a weight-average molecular weight of about 50000 and a degree of unsaturation of approximately 1/1000 expressed as number of unsaturations per polymer segment of weight average molecular weight 1000.

**50.** A prosthesis as claimed in any preceding claim and comprising a fluorinated aromatic carbocyclic monomer and such a proportion of such a strongly hydrophillic comonomer that a body of a hydrogel formed by hydration thereof has an equilibrium water content at 20°C of more than 50%.

**51.** A prosthesis as claimed in Claim 50 wherein the hydrogel has an equilibrium water content of more than 60%.

**52.** A prosthesis as claimed in any one of Claims 1, 5 and 9 wherein the water- insoluble polymeric polyunsaturated cross-linking agent is selected from:-
(i) polyunsaturated cellulose ester derivatives having an average molecular weight of from 25,000 to 100,000 and from 1 to 3 unsaturations per recurring glucose unit; and
(ii) polyunsaturated polyester derivatives having an average molecular weight of from 2000 to 8000 and from 0.5 to 1 unsaturation per recurring polymerized unit.

**53.** A prosthesis as claimed in any preceding claim which is in the form of a hydratable contact lens.

**54.** A prosthesis as claimed in any one of Claims 1 to 52 which is in the form of a hydratable intraocular lens.

**55.** A contact lens or intraocular lens precursor in the form of a moulded article mountable to means for machining and machineable thereon to form said lens.

**56.** A process of making an optical ocular prosthesis as claimed in any one of Claims 1, 5 and 9 which process comprises copolymerizing by heating a mixture of the monomers, cross-linking agents and a polymerization initiator and machining the resulting polymer.

**57.** A process of making an optical ocular prosthesis as claimed in any one of Claims 1, 5 and 9 which process comprises radiation copolymerization of a mixture of the monomers and cross-linking agents and machining the resulting polymer.

**58.** A process for making an optical ocular prosthesis as claimed in any one of Claims 1, 5 and 9 which process comprises moulding and/or machining the body of the polymer.

**Claims for the following Contracting States : AT, BE, IT, LU, SE, CH**

**1.** An optical ocular prosthesis comprising a biologically-acceptable moulded and/or machined body comprised of highly cross-linked polymer, said body being in hydrated or non-hydrated form and said polymer being one which is hydrogel-forming through hydration and obtainable by copolymerization of at least one hydrophilic monomer with a cross-linking component, characterized in that the cross-linking component comprises at least one water-insoluble, polyunsaturated, polymeric cross-linking agent and optionally at least one non-polymeric cross-linking agent.

2. A prosthesis as claimed in Claim 1 wherein the unsaturation of the polymeric cross-linking agent is vinyl or allyl unsaturation.

3. A prosthesis as claimed in Claim 1 wherein the unsaturation of the polymeric cross-linking agent is (meth) acrylic.

4. A prosthesis as claimed in Claim 1 wherein the polyunsaturated polymeric cross-linking agent is a polyunsaturated polyester resin.

5. A prosthesis as claimed in any one of Claims 1 to 4 wherein said cross-linking component comprises at least one polymeric cross-linking agent and optionally at least one non-polymeric cross-linking agent having from two to five olefinic unsaturations per molecule, characterized in that the polymeric cross-linking agent comprises a water-insoluble multiply unsaturated polyester having an unsaturations content:recurring polymerized units ratio of at least 1:3.

6. A prosthesis as claimed in Claim 4 or Claim 5 wherein the polyunsaturated polyester resin is an aliphatic or an aromatic-based polyunsaturated polyester resin or a mixture thereof.

7. A prosthesis as claimed in Claim 6 wherein the polyunsaturated polyester resin is a terephthalate or isophthalate-based polyunsaturated polyester resin.

8. A prosthesis as claimed in Claim 7 wherein the polyunsaturated polyester resin is a phenylisophthalate-containing or phenylterephthalate-containing polyunsaturated polyester resin.

9. A prosthesis as claimed in any one of Claims 1 to 4 wherein said cross-linking component comprises at least one polymeric cross-linking agent and optionally at least one non-polymeric cross-linking agent, characterized in that the polymeric cross-linking agent comprises a water-insoluble derivative of a natural polymer having multiple olefinic unsaturation along its chain or a water-insoluble derivative of a synthetic polymer which is other than a polyester homopolymer or copolymer and which has multiple olefinic unsaturation along its chain.

10. A prosthesis as claimed in Claim 9 wherein the natural or synthetic polymer is polyvinyl alcohol, cellulose, a cellulose ester, vinyl alcohol-vinyl acetate copolymer or methylmethacrylate-2-hydroxyethylmethacrylate copolymer.

11. A prosthesis as claimed in Claim 10 wherein the polymeric cross-linking agent is a (meth) acrylic ester of polyvinyl alcohol or a (meth) acrylic ester of cellulose or of a cellulose ester.

12. A prosthesis as claimed in Claim 11 wherein the (meth) acrylic ester of cellulose or of a cellulose ester is cellulose (meth) acrylate, cellulose acetate (meth) acrylate, cellulose butyrate (meth) acrylate or cellulose acetate butyrate (meth) acrylate.

13. A prosthesis as claimed in Claim 10 wherein the polymeric cross-linking agent is a (meth) acrylic amido derivative of a polyamine.

14. A prosthesis as claimed in any preceding claim wherein the polyunsaturated polymeric cross-linking agent contains fluorine.

15. A prosthesis as claimed in any preceding claim wherein the polymeric cross-linking agent is present in an amount of not more than 20% based on the weight of the hydrogel-forming polymer.

16. A prosthesis as claimed in any preceding claim and containing a non-polymeric cross-linking agent containing three or more unsaturations per molecule.

17. A prosthesis as claimed in any one of Claims 1 to 15 wherein the non-polymeric cross-linking agent is ethylene glycol dimethacrylate, divinyl benzene, divinylethylene urea, divinylpropylene urea, allyl methacrylate, diallylphthalate, diethyleneglycol bis(allylcarbonate), ethoxylated bisphenol A dimethacrylate, trimethylol propane trimethacrylate, diallyl fumarate, diallyl maleate, dipentaerythritol monohydroxy pentacrylate or pentamethacrylate or di, tri-, tetra- or polyethyleneglycol dimethacrylate.

18. A prosthesis as claimed in any preceding claim wherein the hydrophilic monomer is a nitrogen-containing monomer.

19. A prosthesis as claimed in any preceding claim wherein the hydrophilic monomer is a vinyl monomer.

20. A prosthesis as claimed in any preceding claim wherein the hydrophilic monomer is a ring saturated or ring unsaturated heterocyclic vinyl monomer.

21. A prosthesis as claimed in any preceding claim wherein the hydrophilic monomer is a heterocyclic N-vinyl monomer.

22. A prosthesis as claimed in Claim 21 wherein the heterocyclic N-vinyl monomer is an N-vinyl lactam.

23. A prosthesis as claimed in Claim 22 wherein the N-vinyl lactam is a pyrrolidone, piperidone or caprolactam derivative.

24. A prosthesis as claimed in Claim 22 or Claim 23 wherein the N-vinyl lactam is N-vinyl-2-pyrrolidone, N-vinyl-2-piperidone, N-vinyl caprolactam or a derivative thereof.

25. A prosthesis as claimed in Claim 21 wherein the heterocyclic N-vinyl monomer is N-vinyl imidazole, N-vinyl succinamide or N-vinyl glutarimide.

26. A prosthesis as claimed in Claim 18 wherein the nitrogen-containing monomer is an amido derivative of a (meth) acrylic compound.

27. A prosthesis as claimed in Claim 26 wherein the amido derivative is a (meth) acrylamide compound or an N-substituted derivative thereof.

28. A prosthesis as claimed in Claim 26 or Claim 27 wherein the amido derivative is N-methyl acrylamide, N-isopropyl acrylamide, N-diacetone acrylamide, N,N-dimethyl acrylamide, N,N-dimethylaminomethyl acrylamide, N,N- dimethylaminoethyl acrylamide, N-methylaminoisopropyl acrylamide or a methacrylamide analog of any one of the foregoing acrylamides.

29. A prosthesis as claimed in any one of Claims 1, 5 and 9 wherein the hydrophilic monomer is a monovinyl ether, a monovinyl polyether, a hydroxylated vinyl ether, an aminoalkyl (meth) acrylate, a hydroxyalkyl (meth) acrylate or an alkoxy derivative thereof.

30. A prosthesis as claimed in any preceding claim wherein the hydrophilic monomer(s) constitutes at least 35% by weight based on the weight of the hydrogel-forming polymer.

31. A prosthesis as claimed in Claim 30 wherein the hydrophilic monomer(s) constitutes at least 50% by weight based on the weight of the hydrogel-forming polymer.

32. A prosthesis as claimed in any preceding claim and containing one or more hydrophobic comonomers.

33. A prosthesis as claimed in Claim 32 wherein the hydrophobic comonomer is styrene, a vinyl ester, a maleate ester or an alkyl (meth) acrylate.

34. A prosthesis as claimed in any preceding claim and containing a UV-absorber.

**35.** A prosthesis as claimed in Claim 34 wherein the UV-absorber is a UV-absorbing monomer copolymerized in the polymer structure.

**36.** A prosthesis as claimed in Claim 35 wherein the UV-absorbing monomer is a monomer containing one of the following chromophores, namely a residue of 2-hydroxybenzophenone; 2,4-dihydroxybenzophenone; 2,2',4-trihydroxybenzophenone; 2,2',4,4'-tetrahydroxybenzophenone; 2-(2H-benzotriazol-2-yl) phenol; resorcinol monobenzoate; phenyl salicylate; diaryl terephthalate; diaryl isophthalate or a derivative thereof; or UV-absorbing substituted cinnamic acid or a derivative thereof.

**37.** A prosthesis as claimed in Claim 35 or Claim 36 wherein the UV-absorbing monomer is a non-polymeric cross-linking agent.

**38.** A prosthesis as claimed in any preceding claim and containing a fluorinated aromatic carbocyclic monomer.

**39.** A prosthesis as claimed in Claim 38 wherein the fluorinated monomer is of the general formula:-

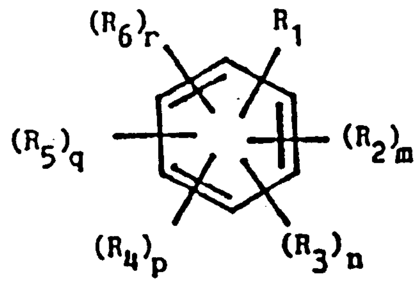

wherein $R_1$ is an optionally fluorinated, unsaturated moiety, $R_2$ is fluorine, $R_2$ to $R_6$ each represent identical or different substituents, n to r are, each independently, zero or one, m is zero or an integer up to a value 5-(n+p+q+r) with the proviso that m is zero only when $R_1$ is a fluorinated unsaturated moiety.

**40.** A prosthesis is claimed in Claim 39 wherein $R_1$ is a fluorinated ethylenically unsaturated hydrocarbon moiety and m to r are zero.

**41.** A prosthesis is claimed in Claim 39 or Claim 40 wherein the fluorinated monomer is a fluorinated styrene.

**42.** A prosthesis is claimed in Claim 41 wherein the fluorinated monomer is di-, tri-, tetra- or penta-fluorinated on the aromatic ring.

**43.** A prosthesis is claimed in Claim 41 or Claim 42 wherein the fluorinated monomer is pentafluorostyrene.

**44.** A prosthesis is claimed in any one of Claims 39 to 43 wherein the fluorinated monomer is present in an amount of not more than 25% by weight based on the weight of the polymer.

**45.** A prosthesis is claimed in Claim 44 wherein the fluorinated monomer is present in an amount of from 0.5% to 10% by weight based on the weight of the polymer.

**46.** A prosthesis as claimed in Claim 9 and comprising methyl methacrylate, ethoxylated bisphenol A dimethacrylate, polyethylene glycol dimethacrylate, allyl methacrylate, 2-hydroxyethyl methacrylate, cellulose acetate methacrylate, diacetone acrylamide and N-vinyl pyrrolidone.

**47.** A prosthesis as claimed in Claim 46 wherein the N-vinyl-2-pyrrolidone constitutes 65 parts by weight based on the weight of the polymer.

**48.** An optical ocular prosthesis as claimed in Claim 46 wherin the polymer is made by copolymerizing a mixture having the following composition by weight:-

| | | |
|---|---|---|
| methyl methacrylate | 30 | parts |
| ethoxylated bisphenol A dimethacrylate | 0.3 | parts |
| polyethylene glycol dimethacrylate | 0.25 | parts |
| allyl methacrylate | 0.25 | parts |
| 2-hydroxyethyl methacrylate | 2.5 | parts |
| purified cellulose acetate methacrylate | 1.5 | parts |
| diacetone acrylamide | 0.25 | parts |
| N-vinyl-2-pyrrolidone | 65 | parts |

**49.** A prosthesis as claimed in any one of Claims 46 to 48 wherein the cellulose acetate methacrylate is a polymeric polyunsaturated cross-linking agent having a weight-average molecular weight of about 50000 and a degree of unsaturation of approximately 1/1000 expressed as number of unsaturations per polymer segment of weight average molecular weight 1000.

**50.** A prosthesis as claimed in any preceding claim and comprising a fluorinated aromatic carbocyclic monomer and such a proportion of such a strongly hydrophillic comonomer that a body of a hydrogel formed by hydration thereof has an equilibrium water content at 20°C of more than 50%.

**51.** A prosthesis as claimed in Claim 50 wherein the hydrogel has an equilibrium water content of more than 60%.

**52.** A prosthesis as claimed in any one of Claims 1, 5 and 9 wherein the water- insoluble polymeric polyunsaturated cross-linking agent is selected from:-

(i) polyunsaturated cellulose ester derivatives having an average molecular weight of from 25,000 to 100,000 and from 1 to 3 unsaturations per recurring glucose unit; and

(ii) polyunsaturated polyester derivatives having an average molecular weight of from 2000 to 8000 and from 0.5 to 1 unsaturation per recurring polymerized unit.

**53.** A prosthesis as claimed in any preceding claim which is in the form of a hydratable contact lens.

**54.** A prosthesis as claimed in any one of Claims 1 to 52 which is in the form of a hydratable intraocular lens.

**55.** A contact lens or intraocular lens precursor in the form of a moulded article mountable to means for machining and machineable thereon to form said lens.

**56.** A process of making an optical ocular prosthesis as claimed in any one of Claims 1, 5 and 9 which process comprises copolymerizing by heating a mixture of the monomers, cross-linking agents and a polymerization initiator and machining the resulting polymer.

**57.** A process of making an optical ocular prosthesis as claimed in any one of Claims 1, 5 and 9 which process comprises radiation copolymerization of a mixture of the monomers and cross-linking agents and machining the resulting polymer.

**58.** A process for making an optical ocular prosthesis as claimed in any one of Claims 1, 5 and 9 which process comprises moulding and/or machining the body of the polymer.

## Patentansprüche

### Patentansprüche für folgende Vertragsstaaten : FR, DE, NL, GB

1. Optische Augenprothese, umfassend einen biologisch verträglichen, gegossenen und/oder bearbeiteten Körper, bestehend aus einem hochvernetzten Polymer, welcher Körper in hydratisierter oder nicht-hydratisierter Form vorliegt und welches Polymer durch Hydratation Hydrogel-bildend ist und durch Copolymerisation von wenigstens einem hydrophilen Monomer mit einer Vernetzungskomponente erhältlich ist, dadurch gekennzeichnet, daß die Vernetzungskomponente (i) wenigstens ein wasserunlösliches, polyungesättigtes, polymeres Vernetzungsagens und (ii) wenigstens ein nicht-polymeres Vernetzungsagens umfaßt.

2. Prothese nach Anspruch 1, worin die Ungesättigtheit des polymeren Vernetzungsagens eine Vinyl- oder Allyl-Ungesättigtheit ist.

3. Prothese nach Anspruch 1, worin die Ungesättigtheit des polymeren Vernetzungsagens (meth) acrylisch ist.

4. Prothese nach Anspruch 2, worin das polyungesättigte, polymere Vernetzungsagens ein polyungesättigtes Polyesterharz ist.

5. Optische Augenprothese, umfassend einen biologisch verträglichen, gegossenen und/oder bearbeiteten Körper, bestehend aus einem hochvernetzten Polymer, welcher Rörper in hydratisierter oder nicht-hydratisierter Form vorliegt und welches Polymer durch Hydratation Hydrogel-bildend ist und durch Copolymerisation von wenigstens einem hydrophilen Monomer mit einer Vernetzungskomponente erhältlich ist, welche Vernetzungskomponente wenigstens ein polymeres Vernetzungsagens und gegebenenfalls ein nicht-polymeres Vernetzungsagens mit zwei bis fünf olefinischen Ungesättigtheiten pro Molekül umfaßt, dadurch gekennzeichnet, daß das polymere Vernetzungsagens einen wasserunlöslichen, vielfach ungesättigten Polyester enthält, welcher ein Verhältnis des Gehaltes der Ungesättigtheiten : sich wiederholenden polymerisierten Einheiten von wenigstens 1:3 aufweist.

6. Prothese nach Anspruch 4 oder 5, worin das polyungesättigte Polyesterharz ein auf Aliphaten oder Aromaten basierendes, polyungesättigtes Polyesterharz oder eine Mischung davon ist.

7. Prothese nach Anspruch 6, worin das polyungesättigte Polyesterharz ein auf Terephthalat oder Isoterephthalat basierendes, polyungesättigtes Polyesterharz ist.

8. Prothese nach Anspruch 7, worin das polyungesättigte Polyesterharz ein Phenylisophthalat- oder Phenylterephthalat-haltiges, polyungesättigtes Polyesterharz ist.

9. Optische Augenprothese, umfassend einen biologisch verträglichen, gegossenen und/oder bearbeiteten Körper, bestehend aus einem hochvernetzten Polymer, welcher Körper in hydratisierter oder nicht-hydratisierter Form vorliegt und welches Polymer durch Hydratation Hydrogel-bildend ist und durch Copolymerisation von wenigstens einem hydrophilen Monomer mit einer Vernetzungskomponentes erhältlich ist, welche Vernetzungskomponente wenigstens ein polymeres Vernetzungsagens und gegebenenfalls ein nicht-polymeres Vernetzungsagens umfaßt, dadurch gekennzeichnet, daß das polymere Vernetzungsagens ein wasserunlösliches Derivat eines natürlich vorkommenden Polymeren, welches entlang seiner Kette vielfache olefinische Ungesättigtheiten aufweist, oder ein wasserunlösliches Derivat eines synthetischen Polymeren aufweist, welches etwas anderes als ein Polyester-Homopolymer oder -Copolymer ist und welches entlang seiner Kette vielfache olefinische Ungesättigtheiten aufweist.

10. Prothese nach Anspruch 9, worin das natürliche oder synthetische Polymer Polyvinylalkohol, Zellulose, ein Zelluloseester, Vinylalkohol-Vinylacetat-Copolymer oder Methylmethacrylat-2-Hydroxyethylmethacrylat-Copolymer ist.

11. Prothese nach Anspruch 10, worin das polymere Vernetzungsagens ein (Meth) Acrylester von Polyvinylalkohol oder ein (Meth) Acrylester von Zellulose oder einem Zelluloseester ist.

12. Prothese nach Anspruch 11, worin der (Meth) Acrylester von Zellulose oder einem Zelluloseester Zellulose(meth)acrylat, Zelluloseacetat(meth)acrylat, Zellulosebutyrat(meth)acrylat oder Zelluloseacetatbutyrat(meth)acrylat ist.

13. Prothese nach Anspruch 10, worin das polymere Vernetzungsagens ein (meth)acrylisches Amidoderivat eines Polyamins ist.

14. Prothese nach einem der vorhergehenden Ansprüche, worin das polyungesättigte, polymere Vernetzungsagens Fluor enthält.

15. Prothese nach einem der vorhergehenden Ansprüche, worin das polymere Vernetzungsagens in einer Menge von nicht mehr als 20 % basierend auf dem Gewicht des Hydrogel-bildenden Polymeren vorliegt.

16. Prothese nach einem der vorhergehenden Ansprüche und enthaltend ein nicht-polymeres Vernetzungsagens enthaltend drei oder mehr Ungesättigtheiten pro Molekül.

17. Prothese nach einem der Ansprüche 1 bis 15, worin das nicht-polymere Vernetzungsagens Ethylenglykoldimethacrylat, Divinylbenzol, Divinylethylenharnstoff, Divinylpropylenharnstoff, Allylmethacrylat, Diallylphthalat, Diethylenglykolbis(allylcarbonat), ethoxyliertes Bisphenol A-dimethacrylat, Trimethylolpropantrimethacrylat, Diallylfumarat, Diallylmaleat, Dipentaerythritol, Monohydroxypentacrylat oder -pentamethacrylat oder Di-, Tri-, Tetra- oder Polyethylenglykoldimethacrylat ist.

18. Prothese nach einem der vorhergehenden Ansprüche, worin das hydrophile Monomer ein Stickstoff-haltiges Monomer ist.

19. Prothese nach einem der vorhergehenden Ansprüche, worin das hydrophile Monomer ein Vinylmonomer ist.

20. Prothese nach einem der vorhergehenden Ansprüche, worin das hydrophile Monomer ein heterocyclisches Vinylmonomer mit gesättigtem oder ungesättigtem Ring ist.

21. Prothese nach einem der vorhergehenden Ansprüche, worin das hydrophile Monomer ein heterocyclisches N-Vinylmonomer ist.

22. Prothese nach Anspruch 21, worin das heterocyclische N-Vinylmonomer ein N-Vinyllactam ist.

23. Prothese nach Anspruch 22, worin das N-Vinyllactam ein Pyrrolidon-, Piperidon- oder Caprolactam-Derivat ist.

24. Prothese nach Anspruch 22 oder 23, worin das N-Vinyllactam N-Vinyl-2-pyrrolidon, N-Vinyl-2-piperidon, N-Vinylcaprolactam oder ein Derivat davon ist.

25. Prothese nach Anspruch 21, worin das heterocyclische N-Vinylmonomer N-Vinylimidazol, N-Vinylsuccinamid oder N-Vinylglutarimid ist.

26. Prothese nach Anspruch 18, worin das Stickstoff-haltige Monomer ein Amido-Derivat einer (Meth) Acrylverbindung ist.

27. Prothese nach Anspruch 26, worin das Amido-Derivat eine (Meth) Acrylverbindung oder ein N-substituiertes Derivat davon ist.

28. Prothese nach Anspruch 26 oder 27, worin das Amido-Derivat N-Methylacrylamid, N-Isopropylacrylamid, N-Diacetonacrylamid, N,N-Dimethylacrylamid, N,N-Dimethylaminomethylacrylamid, N,N-Dimethylaminoethylacrylamid N-Methylaminoisopropylacrylamid oder ein Methacrylamid-Analoges von jedem der zuvor genannten Acrylamide ist.

29. Prothese nach einem der Ansprüche 1, 5 und 9, worin das hydrophile Monomer ein Monovinylether, ein Monovinylpolyether, ein hydroxylierter Vinylether, ein Aminoalkyl(meth)acrylat, ein Hydroxyalkyl-

(meth)acrylat oder ein Alkoxy-Derivat davon ist.

**30.** Prothese nach einem der vorhergehenden Ansprüche, worin das (die) hydrophile(n) Monomer(e) wenigstens 35 Gew.-% basierend auf dem Gewicht des Hydrogel-bildenden Polymeren darstellt(en).

**31.** Prothese nach Anspruch 30, worin das (die) hydrophile(n) Monomer(e) wenigstens 50 Gew.-% basierend auf dem Gewicht des Hydrogel-bildenden Polymeren darstellet(en).

**32.** Prothese nach einem der vorhergehenden Ansprüche und enthaltend eines oder mehrere hydrophobe Comonomere.

**33.** Prothese nach Anspruch 32, worin das hydrophobe Comonomer Styrol, ein Vinylester, ein Maleatester oder ein Alkyl(meth)acrylat ist.

**34.** Prothese nach einem der vorhergehenden Ansprüche und enthaltend einen UV-Absorber.

**35.** Prothese nach Anspruch 34, worin der UV-Absorber ein UV-absorbierendes Monomer ist, welches in die Polymerstruktur copolymersiert ist.

**36.** Prothese nach Anspruch 35, worin das UV-absorbierende Monomer ein Monomer enthaltend einen der folgenden Chromophore, nämlich einen Rest von 2-Hydroxybenzophenon; 2,4-Dihydroxybenzophenon; 2,2',4-Trihydroxybenzophenon; 2,2',4, 4'-Tetrahydroxybenzophenon; 2-(2H-benzotriazol-2-yl)phenol; Resorcinolmonobenzoat; Phenylsalicylat; Diarylterephthalat; Diarylisophthalat oder ein Derivat davon oder UV-absorbierende, substituierte Cinnamsäure oder ein Derivat davon ist.

**37.** Prothese nach Anspruch 35 oder 36, worin das UV-absorbierende Monomer ein nicht-polymeres Vernetzungsagens ist.

**38.** Prothese nach einem der vorhergehenden Ansprüche enthaltend ein fluoriertes, aromatisches, carbocylisches Monomer.

**39.** Prothese nach Anspruch 38, worin das fluorierte Monomer die allgemeine Formel aufweist:

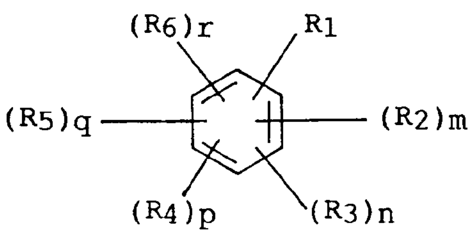

worin $R_1$ ein gegebenenfalls fluorierter, ungesättigter Rest ist, $R_2$ Fluor ist, $R_2$ bis $R_6$ jeweils identische oder voneinander verschiedene Substituenten darstellen, $\underline{n}$ bis $\underline{r}$ jeweils unanhängig voneinander Null oder Eins sind, $\underline{m}$ Null oder eine ganze Zahl bis zu einem Wert von 5-($\underline{n}$+$\underline{p}$+$\underline{q}$+$\underline{r}$) ist, mit dem Proviso, daß $\underline{m}$ nur dann Null ist, wenn $R_1$ ein fluorierter, ungesättigter Rest ist.

**40.** Prothese nach Anspruch 39, worin $R_1$ ein fluorierter, ethylenisch ungesättigter Kohlenwasserstoff-Rest ist und $\underline{m}$ bis $\underline{r}$ Null sind.

**41.** Prothese nach Anspruch 39 oder 40, worin das fluorierte Monomer ein fluoriertes Styrol ist.

**42.** Prothese nach Anspruch 41, worin das fluorierte Monomer an dem aromatischen Ring di-, tri-, tetra- oder penta-fluoriert ist.

**43.** Prothese nach Anspruch 41 oder 42, worin das fluorierte Monomer Pentafluorstyrol ist.

**44.** Prothese nach einem der Ansprüche 39 bis 43, worin das fluorierte Monomer in einer Menge von nicht

mehr als 25 Gew.-% basierend auf dem Gewicht des Polymeren vorhanden ist.

**45.** Prothese nach Anspruch 44, worin das fluorierte Monomer in einer Menge von 0,5 bis 10 Gew.-% basierend auf dem Gewicht des Polymeren vorhanden ist.

**46.** Prothese nach Anspruch 9, enthaltend Methylmethacrylat, ethoxyliertes Bisphenol A-dimethacrylat, Polyethylenglykoldimethacrylat, Allylmethacrylat, 2-Hydroxyethylmethacrylat, Zelluloseacetatmethacrylat, Diacetonacrylamid und N-Vinylpyrrolidon.

**47.** Prothese nach Anspruch 46, worin das N-Vinyl-2-pyrrolidon 65 Gewichtsteile basierend auf dem Gewicht des Polymeren darstellt.

**48.** Optische Augenprothese nach Anspruch 46, worin das Polymer durch Copolymerisation aus einer Mischung, welche die folgende Zusammensetzung in Gewichtsteilen aufweist:

| | |
|---|---|
| Methylmethacrylat | 30 Teile |
| ethoxyliertes Bisphenol A-dimethacrylat | 0,3 Teile |
| Polyethylenglykoldimethacrylat | 0,25 Teile |
| Allylmethacrylat | 0,25 Teile |
| 2-Hydroxyethylmethacrylat | 2,5 Teile |
| gereinigtes Zelluloseacetatmethacrylat | 1,5 Teile |
| Diacetonacrylamid | 0,25 Teile |
| N-Vinyl-2-pyrrolidon | 65 Teile |

hergestellt ist.

**49.** Prothese nach einem der Ansprüche 46 bis 48, worin das Zelluloseacetatmethacrylat ein polymeres, polyungesättigtes Vernetzungsagens, welches ein mittleres Molekulargewicht von etwa 50 000 und einen Grad der ungesättigtheit von etwa 1/1000 ausgedrückt als Zahl der Ungesättigtheiten pro Polymersegment mit dem Gewichtsmittel des Molekulargewichts von 1000 aufweist, ist.

**50.** Prothese nach einem der vorhergehenden Ansprüche umfassend ein fluoriertes, aromatisches, carbocyclisches Monomer und einen derartigen Anteil eines solchen stark hydrophilen Comonomeren, daß ein Körper aus einem durch Hydratation daraus gebildeten Hydrogel einen Gleichgewichts-Wassergehalt bei 20 °C von mehr als 50 % aufweist.

**51.** Prothese nach Anspruch 50, worin das Hydrogel einen Gleichgewichts-Wassergehalt von mehr als 60 % aufweist.

**52.** Prothese nach einem der Ansprüche 1, 5 und 9, worin das wasserunlösliche, polymere, polyungesättigte Vernetzungsagens gewählt ist aus:

(i) polyungesättigten Zelluloseester-Derivaten, welche ein mittleres Molekulargewicht von 25 000 bis 100 000 und von 1 bis 3 Ungesättigtheiten pro sich wiederholender Glukoseeinheit aufweisen; und

(ii) polyungesättigten Polyester-Derivaten, welche ein mittleres Molekulargewicht von 2000 bis 8000 und von 0,5 bis 1 Ungesättigtheiten pro sich wiederholender, polymerisierter Einheit aufweisen.

**53.** Prothese nach einem der vorhergehenden Ansprüche, welche in Form einer hydratisierbaren Kontaktlinse vorliegt.

**54.** Prothese nach einem der Ansprüche 1 bis 52, welche in Form einer hydratisierbaren Intraokularlinse vorliegt.

55. Kontaktlinsen- oder Intraokularlinsen-Vorläufer in Form eines gegossenen Artikels montierbar auf Mittel zum Bearbeiten und darauf bearbeitbar, um die Linse zu formen.

56. Verfahren zur Herstellung einer optischen Augenprothese nach einem der Ansprüche 1, 5 und 9, welches Verfahren das Copolymerisieren durch Erhitzen einer Mischung aus den Monomeren, Vernetzungsagenzien und einem Polymerisationsinitiator und Bearbeiten des resultierenden Polymeren umfaßt.

57. Verfahren zur Herstellung einer optischen Augenprothese nach einem der Ansprüche 1, 5 und 9, welches Verfahren das Bestrahlungs-Copolymerisieren einer Mischung aus den Monomeren und Vernetzungsagenzien und Bearbeiten des resultierenden Polymeren umfaßt.

58. Verfahren zur Herstellung einer optischen Augenprothese nach einem der Ansprüche 1, 5 und 9, welches Verfahren das Gießen und/oder Bearbeiten des Körpers aus dem Polymeren umfaßt.

**Patentansprüche für folgende Vertragsstaaten : AT, BE, IT, LU, SE, CH**

1. Optische Augenprothese, umfassend einen biologisch verträglichen, gegossenen und/oder bearbeiteten Körper, bestehend aus einem hochvernetzten Polymer, welcher Körper in hydratisierter oder nicht-hydratisierter Form vorliegt und welches Polymer durch Hydratation Hydrogel-bildend ist und durch Copolymerisation von wenigstens einem hydrophilen Monomer mit einer Vernetzungskomponente erhältlich ist, dadurch gekennzeichnet, daß die Vernetzungskomponente wenigstens ein wasserunlösliches, polyungesättigtes, polymeres Vernetzungsagens und gegebenenfalls wenigstens ein nicht-polymeres Vernetzungsagens umfaßt.

2. Prothese nach Anspruch 1, worin die Ungesättigtheit des polymeren Vernetzungsagens eine Vinyl- oder Allyl-Ungesättigtheit ist.

3. Prothese nach Anspruch 1, worin die Ungesättigtheit des polymeren Vernetzungsagens (meth) acrylisch ist.

4. Prothese nach Anspruch 1, worin das polyungesättigte, polymere Vernetzungsagens ein polyungesättigtes Polyesterharz ist.

5. Prothese nach einem der Ansprüche 1 bis 4, worin die Vernetzungskomponente wenigstens ein polymeres Vernetzungsagens und gegebenenfalls ein nicht-polymeres Vernetzungsagens mit zwei bis fünf olefinischen Ungesättigtheiten pro Molekül umfaßt, dadurch gekennzeichnet, daß das polymere Vernetzungsagens einen wasserunlöslichen, vielfach ungesättigten Polyester enthält, welcher ein Verhältnis des Gehaltes an Ungesättigtheiten : sich wiederholenden polymerisierten Einheiten von wenigstens 1:3 aufweist.

6. Prothese nach Anspruch 4 oder 5, worin das polyungesättigte Polyesterharz ein auf Aliphaten oder Aromaten basierendes, polyungesättigtes Polyesterharz oder eine Mischung davon ist.

7. Prothese nach Anspruch 6, worin das polyungesättigte Polyesterharz ein auf Terephthalat oder Isoterephthalat basierendes, polyungesättigtes Polyesterharz ist.

8. Prothese nach Anspruch 7, worin das polyungesättigte Polyesterharz ein Phenylisophthalat- oder Phenylterephthalat-haltiges, polyungesättigtes Polyesterharz ist.

9. Prothese nach einem der Ansprüche 1 bis 4, worin die Vernetzungskomponente wenigstens ein polymeres Vernetzungsagens und gegebenenfalls ein nicht-polymeres Vernetzungsagens umfaßt, dadurch gekennzeichnet, daß das polymere Vernetzungsagens ein wasserunlösliches Derivat eines natürlich vorkommenden Polymeren aufweist, welches entlang seiner Kette vielfache olefinische Ungesättigtheiten aufweist oder ein wasserunlösliches Derivat eines synthetischen Polymeren aufweist, welches etwas anderes als ein Polyester-Homopolymer oder -Copolymer ist und welches entlang seiner Kette vielfache olefinische Ungesättigtheiten aufweist.

10. Prothese nach Anspruch 9, worin das natürliche oder synsynthetische Polymer Polyvinylalkohol, Zellulose, ein Zelluloseester, Vinylalkohol-Vinylacetat-Copolymer oder Methylmethacrylat-2-Hydroxyethylmethacrylat-Copolymer ist.

11. Prothese nach Anspruch 10, worin das polymere Vernetzungsagens ein (Meth) Acrylester von Polyvinylalkohol oder ein (Meth) Acrylester von Zellulose oder einem Zelluloseester ist.

12. Prothese nach Anspruch 11, worin der (Meth) Acrylester von Zellulose oder einem Zelluloseester Zellulose(meth)acrylat, Zelluloseacetat(meth)acrylat, Zellulosebutyrat(meth)acrylat oder Zelluloseacetatbutyrat(meth)acrylat ist.

13. Prothese nach Anspruch 10, worin das polymere Vernetzungsagens ein (meth)acrylisches Amidoderivat eines Polyamins ist.

14. Prothese nach einem der vorhergehenden Ansprüche, worin das polyungesättigte, polymere Vernetzungsagens Fluor enthält.

15. Prothese nach einem der vorhergehenden Ansprüche, worin das polymere Vernetzungsagens in einer Menge von nicht mehr als 20 % basierend auf dem Gewicht des Hydrogel-bildenden Polymeren vorliegt.

16. Prothese nach einem der vorhergehenden Ansprüche und enthaltend ein nicht-polymeres Vernetzungsagens enthaltend drei oder mehr Ungesättigtheiten pro Molekül.

17. Prothese nach einem der Ansprüche 1 bis 15, worin das nicht-polymere Vernetzungsagens Ethylenglykoldimethacrylat, Divinylbenzol, Divinylethylenharnstoff, Divinylpropylenharnstoff, Allylmethacrylat, Diallylphthalat, Diethylenglykolbis(allylcarbonat), ethoxyliertes Bisphenol A-dimethacrylat, Trimethylolpropantrimethacrylat, Diallylfumarat, Diallylmaleat, Dipentaerythritol, Monohydroxypentacrylat oder -pentamethacrylat oder Di-, Tri-, Tetra- oder Polyethylenglykoldimethacrylat ist.

18. Prothese nach einem der vorhergehenden Ansprüche, worin das hydrophile Monomer ein Stickstoff-haltiges Monomer ist.

19. Prothese nach einem der vorhergehenden Ansprüche, worin das hydrophile Monomer ein Vinylmonomer ist.

20. Prothese nach einem der vorhergehenden Ansprüche, worin das hydrophile Monomer ein heterocyclisches Vinylmonomer mit gesättigtem oder ungesättigtem Ring ist.

21. Prothese nach einem der vorhergehenden Ansprüche, worin das hydrophile Monomer ein heterocyclisches N-Vinylmonomer ist.

22. Prothese nach Anspruch 21, worin das heterocyclische N-Vinylmonomer ein N-Vinyllactam ist.

23. Prothese nach Anspruch 22, worin das N-Vinyllactam ein Pyrrolidon-, Piperidon- oder Caprolactam-Derivat ist.

24. Prothese nach Anspruch 22 oder 23, worin das N-Vinyllactam N-Vinyl-2-pyrrolidon, N-Vinyl-2-piperidon, N-Vinylcaprolactam oder ein Derivat davon ist.

25. Prothese nach Anspruch 21, worin das heterocyclische N-Vinylmonomer N-Vinylimidazol, N-Vinylsuccinamid oder N-Vinylglutarimid ist.

26. Prothese nach Anspruch 18, worin das Stickstoff-haltige Monomer ein Amido-Derivat einer (Meth) Acrylverbindung ist.

27. Prothese nach Anspruch 26, worin das Amido-Derivat eine (Meth) Acrylverbindung oder ein N-substituiertes Derivat davon ist.

28. Prothese nach Anspruch 26 oder 27, worin das Amido-Derivat N-Methylacrylamid, N-Isopropylacrylamid,

N-Diacetonacrylamid, N,N-Dimethylacrylamid, N,N-Dimethylaminomethylacrylamid, N,N-Dimethylaminoethylacrylamid, N-Methylaminoisopropylacrylamid oder ein Methacrylamid-Analoges von jedem der zuvor genannten Acrylamide ist.

**29.** Prothese nach einem der Ansprüche 1, 5 und 9, worin das hydrophile Monomer ein Monovinylether, ein Monovinylpolyether, ein hydroxylierter Vinylether, ein Aminoalkyl(meth)acrylat, ein Hydroxyalkyl-(meth)acrylat oder ein Alkoxy-Derivat davon ist.

**30.** Prothese nach einem der vorhergehenden Ansprüche, worin das (die) hydrophile(n) Monomer(e) wenigstens 35 Gew.-% basierend auf dem Gewicht des Hydrogel-bildenden Polymeren darstellt(en).

**31.** Prothese nach Anspruch 30, worin das (die) hydrophile(n) Monomer(e) wenigstens 50 Gew.-% basierend auf dem Gewicht des das Hydrogel-bildenden Polymeren darstellt(en).

**32.** Prothese nach einem der vorhergehenden Ansprüche und enthaltend eines oder mehrere hydrophobe Comonomere.

**33.** Prothese nach Anspruch 32, worin das hydrophobe Comonomer Styrol, ein Vinylester, ein Maleatester oder ein Alkyl(meth)acrylat ist.

**34.** Prothese nach einem der vorhergehenden Ansprüche und enthaltend einen UV-Absorber.

**35.** Prothese nach Anspruch 34, worin der UV-Absorber ein UV-absorbierendes Monomer ist, welches in die Polymerstruktur copolymersiert ist.

**36.** Prothese nach Anspruch 35, worin das UV-absorbierende Monomer ein Monomer enthaltend einen der folgenden Chromophore, nämlich einen Rest von 2-Hydroxybenzophenon; 2,4-Dihydroxybenzophenon; 2,2′,4-Trihydroxybenzophenon; 2,2′,4, 4′-Tetrahydroxybenzophenon; 2-(2H-benzotriazol-2-yl)phenol; Resorcinolmonobenzoat; Phenylsalicylat; Diarylterephthalat; Diarylisophthalat oder ein Derivat davon oder UV-absorbierende, substituierte Cinnamsäure oder ein Derivat davon ist.

**37.** Prothese nach Anspruch 35 oder 36, worin das UV-absorbierende Monomer ein nicht-polymeres Vernetzungsagens ist.

**38.** Prothese nach einem der vorhergehenden Ansprüche enthaltend ein fluoriertes, aromatisches, carbocylisches Monomer.

**39.** Prothese nach Anspruch 38, worin das fluorierte Monomer die allgemeine Formel aufweist:

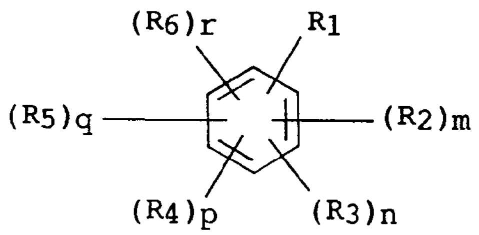

worin $R_1$ ein gegebenenfalls fluorierter, ungesättigter Rest ist, $R_2$ Fluor ist, $R_2$ bis $R_6$ jeweils identische oder voneinander verschiedene Substituenten darstellen, n bis r jeweils unanhängig voneinander Null oder Eins sind, m Null oder eine ganze Zahl bis zu einem Wert von 5-(n+p+q+r) ist, mit dem Proviso, daß m nur dann Null ist, wenn $R_1$ ein fluorierter, ungesättigter Rest ist.

**40.** Prothese nach Anspruch 39, worin $R_1$ ein fluorierter, ethylenisch ungesättigter Kohlenwasserstoff-Rest ist und m bis r Null sind.

**41.** Prothese nach Anspruch 39 oder 40, worin das fluorierte Monomer ein fluoriertes Styrol ist.

42. Prothese nach Anspruch 41, worin das fluorierte Monomer an dem aromatischen Ring di-, tri-, tetra- oder penta-fluoriert ist.

43. Prothese nach Anspruch 41 oder 42, worin das fluorierte Monomer Pentafluorstyrol ist.

44. Prothese nach einem der Ansprüche 39 bis 43, worin das fluorierte Monomer in einer Menge von nicht mehr als 25 Gew.-% basierend auf dem Gewicht des Polymeren vorhanden ist.

45. Prothese nach Anspruch 44, worin das fluorierte Monomer in einer Menge von 0,5 bis 10 Gew.-% basierend auf dem Gewicht des Polymeren vorhanden ist.

46. Prothese nach Anspruch 9, enthaltend Methylmethacrylat, ethoxyliertes Bisphenol A-dimethacrylat, Polyethylenglykoldimethacrylat, Allylmethacrylat, 2-Hydroxyethylmethacrylat, Zelluloseacetatmethacrylat, Diacetonacrylamid und N-Vinylpyrrolidon.

47. Prothese nach Anspruch 46, worin das N-Vinyl-2-pyrrolidon 65 Gewichtsteile basierend auf dem Gewicht des Polymeren darstellt.

48. Optische Augenprothese nach Anspruch 46, worin das Polymer durch Copolymerisation aus einer Mischung, welche die folgende Zusammensetzung in Gewichtsteilen aufweist:

| | |
|---|---|
| Methylmethacrylat | 30 Teile |
| ethoxyliertes Bisphenol A-dimethacrylat | 0,3 Teile |
| Polyethylenglykoldimethacrylat | 0,25 Teile |
| Allylmethacrylat | 0,25 Teile |
| 2-Hydroxyethylmethacrylat | 2,5 Teile |
| gereinigtes Zelluloseacetatmethacrylat | 1,5 Teile |
| Diacetonacrylamid | 0,25 Teile |
| N-Vinyl-2-pyrrolidon | 65 Teile |

hergestellt ist.

49. Prothese nach einem der Ansprüche 46 bis 48, worin das Zelluloseacetatmethacrylat ein polymeres, polyungesättigtes Vernetzungsagens, welches ein mittleres Molekulargewicht von etwa 50 000 und einen Grad der Ungesättigtheit von etwa 1/1000 ausgedrückt als Zahl der Ungesättigtheiten pro Polymersegment mit dem Gewichtsmittel des Molekulargewichts von 1000 aufweist, ist.

50. Prothese nach einem der vorhergehenden Ansprüche umfassend ein fluoriertes, aromatisches, carbocyclisches Monomer und einen derartigen Anteil eines solchen stark hydrophilen Comonomeren, daß ein Körper aus einem durch Hydratation daraus gebildeten Hydrogel einen Gleichgewichts-Wassergehalt bei 20 °C von mehr als 50 % aufweist.

51. Prothese nach Anspruch 50, worin das Hydrogel einen Gleichgewichts-Wassergehalt von mehr als 60 % aufweist.

52. Prothese nach einem der Ansprüche 1, 5 und 9, worin das wasserunlösliche, polymere, polyungesättigte Vernetzungsagens gewählt ist aus:
(i) polyungesättigten Zelluloseester-Derivaten, welche ein mittleres Molekulargewicht von 25 000 bis 100 000 und von 1 bis 3 Ungesättigtheiten pro sich wiederholender Glukoseeinheit aufweisen; und
(ii) polyungesättigten Polyester-Derivaten, welche ein mittleres Molekulargewicht von 2000 bis 8000 und von 0,5 bis 1 Ungesättigtheiten pro sich wiederholender, polymerisierter Einheit aufweisen.

53. Prothese nach einem der vorhergehenden Ansprüche, welche in Form einer hydratisierbaren Kontaktlinse vorliegt.

**54.** Prothese nach einem der Ansprüche 1 bis 52, welche in Form einer hydratisierbaren Intraokularlinse vorliegt.

**55.** Kontaktlinsen- oder Intraokularlinsen-Vorläufer in Form eines gegossenen Artikels montierbar auf Mittel zum Bearbeiten und darauf bearbeitbar, um die Linse zu formen.

**56.** Verfahren zur Herstellung einer optischen Augenprothese nach einem der Ansprüche 1, 5 und 9, welches Verfahren das Copolymerisieren durch Erhitzen einer Mischung aus den Monomeren, Vernetzungsagenzien und einem Polymerisationsinitiator und Bearbeiten des resultierenden Polymeren umfaßt.

**57.** Verfahren zur Herstellung einer optischen Augenprothese nach einem der Ansprüche 1, 5 und 9, welches Verfahren das Bestrahlungs-Copolymerisieren einer Mischung aus den Monomeren und Vernetzungsagenzien und Bearbeiten des resultierenden Polymeren umfaßt.

**58.** Verfahren zur Herstellung einer optischen Augenprothese nach einem der Ansprüche 1, 5 und 9, welches Verfahren das Gießen und/oder Bearbeiten des Körpers aus dem Polymeren umfaßt.

## Revendications

### Revendications pour les Etats contractants suivants : FR, DE, NL, GB

**1.** Prothèse oculaire optique comprenant un élément moulé et/ou façonné biologiquement acceptable à base d'un polymère hautement réticulé, ledit élément étant sous forme hydratée ou non hydratée et ledit polymère du type formant un hydrogel par hydratation et pouvant être obtenu par copolymérisation d'au moins un monomère hydrophile avec un composant réticulant, caractérisée en ce que le composant réticulant comprend (i) au moins un agent réticulant polymère polyinsaturé insoluble dans l'eau et (ii) au moins un agent réticulant non polymère.

**2.** Prothèse selon la revendication 1, dans laquelle l'insaturation de l'agent réticulant polymère est une insaturation vinylique ou allylique.

**3.** Prothèse selon la revendication 1, dans laquelle l'insaturation de l'agent réticulant polymère est (meth) acrylique.

**4.** Prothèse selon la revendication 2, dans laquelle l'agent réticulant polymère polyinsaturé est une résine polyester polyinsaturée.

**5.** Prothèse oculaire optique comprenant un élément moulé et/ou façonné biologiquement acceptable à base d'un polymère hautement réticulé, ledit élément étant sous forme hydratée ou non hydratée et ledit polymère étant du type formant un hydrogel par hydratation et pouvant être obtenu par copolymérisation d'au moins un monomère hydrophile avec un composant réticulant, ledit composant réticulant comprenant au moins un agent réticulant polymère et éventuellement au moins un agent réticulant non polymère ayant de deux à cinq insaturations oléfiniques par molécule, caractérisée en ce que l'agent réticulant polymère comprend un polyester insoluble dans l'eau à insaturations multiples présentant un rapport teneur en insaturations : motifs de base polymérisés d'au moins 1:3.

**6.** Prothèse selon la revendication 4 ou 5, dans laquelle la résine polyester polyinsaturée est une résine polyester aliphatique ou une résine polyester polyinsaturée à base de motifs aromatiques ou un mélange de ceux-ci.

**7.** Prothèse selon la revendication 6, dans laquelle la résine polyester polyinsaturée est une résine polyester à base de motifs téréphtalate ou isophtalate.

**8.** Prothèse selon la revendication 7, dans laquelle la résine polyester polyinsaturée est une résine polyester polyinsaturée contenant des motifs phénylisophtalate ou phényltéréphtalate.

**9.** Prothèse oculaire optique comprenant un élément moulé et/ou façonné biologiquement acceptable à base

d'un polymère hautement réticulé, ledit élément étant sous forme hydratée ou non hydratée et ledit polymère étant de type formant un hydrogel par hydratation et pouvant être obtenu par copolymérisation d'au moins un monomère hydrophile avec un composant réticulant, ledit composant réticulant comprenant au moins un agent réticulant polymère et éventuellement au moins un agent réticulant non polymère, caractérisée en ce que l'agent réticulant polymère comprend un dérivé insoluble dans l'eau d'un polymère naturel ayant des insaturations oléfiniques multiples dans sa chaîne ou un dérivé insoluble dans l'eau d'un polymère synthétique qui est différent d'un homopolymère ou d'un copolymère de polyester et qui possède de multiples insaturations oléfiniques dans sa chaîne.

**10.** Prothèse selon la revendication 9, dans laquelle le polymère naturel ou synthétique est l'alcool polyvinylique, la cellulose, un ester de cellulose, un copolymère alcool vinylique-acétate de vinyle ou un copolymère méthacrylate de méthyle-méthacrylate de 2-hydroxyéthyle.

**11.** Prothèse selon la revendication 10, dans laquelle l'agent réticulant polymère est un ester (meth) acrylique d'alcool polyvinylique ou un ester (meth) acrylique de cellulose ou d'un ester de cellulose.

**12.** Prothèse selon la revendication 11, dans laquelle l'ester (meth) acrylique de cellulose ou d'ester de cellulose et le (meth) acrylate de cellulose, le (meth) acrylate d'acétate de cellulose, le (meth) acrylate de butyrate de cellulose ou le (meth) acrylate d'acétate butyrate de cellulose.

**13.** Prothèse selon la revendication 10, dans laquelle l'agent réticulant polymère est un dérivé (meth) acrylique amido ou une polyamine.

**14.** Prothèse selon l'une quelconque des revendications précédentes, dans laquelle l'agent réticulant polymère polyinsaturé contient du fluor.

**15.** Prothèse selon l'une quelconque des revendications précédentes, dans laquelle l'agent réticulant polymère est présent en une quantité inférieure à 20% rapportée au poids du polymère formant un hydrogel.

**16.** Prothèse selon l'une quelconque des revendications précédentes, et contenant un agent réticulant non polymère contenant trois insaturations ou plus par molécule.

**17.** Prothèse selon l'une quelconque des revendications 1 à 15, dans laquelle l'agent réticulant non polymère est le diméthacrylate d'éthylène glycol, le divinyl benzène, la divinyléthylène urée, la divinylpropylène urée, le méthacrylate d'allyle, le phtalate de diallyle, le bis (allylcarbonate) de diéthylèneglycol, le diméthacrylate de bisphénol A éthoxylé, le triméthacrylate de triméthylol propane, le fumarate de diallyle, le maléate de diallyle, le monohydroxy pentacrylate ou pentaméthacrylate de dipentaérythritol ou le diméthacrylate de di, tri, tetra ou polyéthylèneglycol.

**18.** Prothèse selon l'une quelconque des revendications précédentes, dans laquelle le monomère hydrophile est un monomère contenant de l'azote.

**19.** Prothèse selon l'une quelconque des revendications précédentes dans laquelle le monomère hydrophile est un monomère vinylique.

**20.** Prothèse selon l'une quelconque des revendications précédentes, dans laquelle le monomère hydrophile est un monomère vinylique hétérocyclique à noyau saturé ou insaturé.

**21.** Prothèse selon l'une quelconque des revendications précédentes, dans laquelle le monomère hydrophile est un monomère N-vinyl hétérocyclique.

**22.** Prothèse selon la revendication 21, dans laquelle le monomère N-vinyl hétérocyclique est un N-vinyl lactame.

**23.** Prothèse selon la revendication 22, dans laquelle le N-vinyl lactame est un dérivé de la pyrrolidone, de la pipéridone ou du caprolactame.

**24.** Prothèse selon la revendication 22 ou 23, dans laquelle le N-vinyl lactame est la N-vinyl-2-pyrrolidone,

la N-vinyl-2-pipéridone, le N-vinyl caprolactame ou un dérivé de ces derniers.

**25.** Prothèse selon la revendication 21, dans laquelle le monomère N-vinyl hétérocyclique est le N-vinyl imidazole, le N-vinyl succinamide ou le N-vinyl glutarimide.

**26.** Prothèse selon la revendication 18, dans laquelle le monomère contenant de l'azote est un dérivé amido d'un composé (meth) acrylique.

**27.** Prothèse selon la revendication 26, dans laquelle le dérivé amido est un (meth) acrylamide ou un dérivé N-substitué de celui-ci.

**28.** Prothèse selon la revendication 26 ou 27, dans laquelle le dérivé amido est le N-méthyl acrylamide, le N-isopropyl acrylamide, le N-diacétone acrylamide, le N,N-diméthyl acrylamide, le N,N-diméthylaminométhyl acrylamide, le N,N-diméthyaminoéthyl acrylamide, le N-méthylaminoisopropyl acrylamide ou un analogue de type méthacrylamide de l'un quelconque des acrylamides précédents.

**29.** Prothèse selon l'une quelconque des revendications 1, 5 et 9, dans laquelle le monomère hydrophile est un éther monovinylique, un polyéther monovinylique, un éther vinylique hydroxylé, un (meth) acrylate d'aminoalkyle, un (meth) acrylate d'hydroxyalkyle ou un dérivé alcoxy de ceux-ci.

**30.** Prothèse selon l'une quelconque des revendications précédentes, dans laquelle le (s) monomère(s) hydrophile(s) constitue(nt) au moins 35% en poids rapporté au poids du polymère formant un hydrogel.

**31.** Prothèse selon la revendication 30, dans laquelle le(s) monomère(s) hydrophile(s) constitue(nt) au moins 50% en poids rapporté au poids du polymère formant un hydrogel.

**32.** Prothèse selon l'une quelconque des revendications précédentes, et contenant un ou plusieurs comonomères hydrophobes.

**33.** Prothèse selon la revendication 32, dans laquelle le comonomère hydrophobe est le styrène, un ester vinylique, un ester de maléate ou un (meth) acrylate d'alkyle.

**34.** Prothèse selon l'une quelconque des revendications précédentes, et contenant un absorbeur d'UV.

**35.** Prothèse selon la revendication 34, dans laquelle l'absorbeur d'UV est un monomère absorbant les UV copolymérisé en une structure polymère.

**36.** Prothèse selon la revendication 35, dans laquelle le monomère absorbant les UV est un monomère contenant un des chromophores suivants, notamment un résidu de 2-hydroxybenzophénone ; 2,4-dihydroxybenzophénone ; 2,2′,4-trihydroxybenzophénone ; 2,2′,4,4′-tétrahydroxybenzophénone ; 2-(2H-benzotriazol-2-yl) phénol ; monobenzoate de résorcinol ; du salicylate de phényle ; du téréphtalate de diaryle ; de l'isophtalate de diaryle ou un dérivé de ceux-ci ; ou l'acide cinnamique substitué absorbant les UV ou un dérivé de celui-ci.

**37.** Prothèse selon la revendication 35 ou 36, dans laquelle le monomère absorbant les UV est un agent réticulant non polymère.

**38.** Prothèse selon l'une quelconque des revendications précédentes, et contenant un monomère carbocyclique aromatique fluoré.

**39.** Prothèse selon la revendication 38, dans laquelle le monomère fluoré répond à la formule générale:

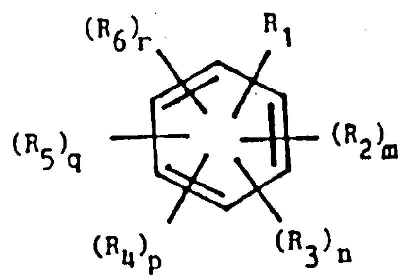

dans laquelle $R_1$ est un reste insaturé éventuellement fluoré, $R_2$ est un atome de fluor, $R_2$ à $R_6$ représentent chacun des substituants identiques ou différents, n à r sont, chacun indépendamment, zéro ou un, m est zéro ou un entier jusqu'à une valeur 5-(n+p+q+r) sous réserve que m représente zéro seulement lorsque $R_1$ représente un reste insaturé fluoré.

**40.** Prothèse selon la revendication 39, dans laquelle $R_1$ est un reste hydrocarboné fluoré à insaturation éthylénique et m à r représentent zéro.

**41.** Prothèse selon la revendication 39 ou 40, dans laquelle le monomère fluoré est du styrène fluoré.

**42.** Prothèse selon la revendication 41, dans laquelle le monomère fluoré est di-, tri-, tétra- ou penta-fluoré sur le cycle aromatique.

**43.** Prothèse selon la revendication 41 ou 42, dans laquelle le monomère fluoré est le pentafluorostyrène.

**44.** Prothèse selon l'une quelconque des revendications 39 à 43, dans laquelle le monomère fluoré est présent en une quantité inférieure à 25% en poids rapporté au poids du polymère.

**45.** Prothèse selon la revendication 44, dans laquelle le monomère fluoré est présent en une quantité de 0,5% à 10% en poids rapporté au poids du polymère.

**46.** Prothèse selon la revendication 9, et comprenant du méthacrylate de méthyle, du diméthacrylate de bisphénol A éthoxylé, du diméthacrylate de polyéthylène glycol, du méthacrylate d'allyle, du méthacrylate de 2-hydroxyéthyle, du méthacrylate d'acétate de cellulose, de la diacétone acrylamide et de la N-vinyl pyrrolidone.

**47.** Prothèse selon la revendication 46, dans laquelle la N-vinyl-2-pyrrolidone constitue 65 parties en poids rapporté au poids du polymère.

**48.** Prothèse oculaire optique selon la revendication 46, dans laquelle le polymère est obtenu par copolymérisation d'un mélange ayant la composition pondérale suivante :

| | |
|---|---|
| méthacrylate de méthyle | 30 parties |
| diméthacrylate de bisphénol A éthoxylé | 0,3 partie |
| diméthacrylate de polyéthylène glycol éthoxylé | 0,25 partie |
| méthacrylate d'allyle | 0,25 partie |
| méthacrylate de 2-hydroxyéthyle | 2,5 parties |
| méthacrylate d'acétate de cellulose purifié | 1,5 partie |
| diacétone acrylamide | 0,25 partie |
| N-vinyl-2-pyrrolidone | 65 parties |

**49.** Prothèse selon l'une quelconque des revendications 46 à 48, dans laquelle le méthacrylate d'acétate de cellulose est un agent réticulant polymère polyinsaturé ayant un poids moléculaire moyen en poids d'environ 50000 et un degré d'insaturation d'environ 1/1000 exprimé en tant que nombre d'insaturations par segment de polymère d'un poids moléculaire moyen en poids de 1000.

**50.** Prothèse selon l'une quelconque des revendications précédentes, et comprenant un monomère carbocyclique aromatique fluoré et une proportion d'un comonomère hydrophile fortement hydrophile telle qu'un élément d'hydrogel formé par hydratation de celui-ci possède une teneur en eau à l'équilibre à 20°C supérieure à 50%.

**51.** Prothèse selon la revendication 50, dans laquelle l'hydrogel a une teneur en eau à l'équilibre supérieure à 60%.

**52.** Prothèse selon l'une quelconque des revendications 1, 5 et 9, dans laquelle l'agent réticulant polymère polyinsaturé insoluble dans l'eau est choisi parmi:
(i) les dérivés d'ester de cellulose polyinsaturés ayant un poids moléculaire moyen de 25.000 à 100.000 et de 1 à 3 insaturations par motif de glucose de base; et
(ii) les dérivés de polyester polyinsaturés ayant un poids moléculaire moyen de 2.000 à 8.000 et de 0,5 à 1 insaturation par motif de base polymérisé.

**53.** Prothèse selon l'une quelconque des revendications précédentes, qui est sous la forme d'une lentille de contact hydratable.

**54.** Prothèse selon l'une quelconque des revendications 1 à 52, qui est sous la forme d'une lentille intraoculaire hydratable.

**55.** Lentille de contact ou précurseur de lentille intraoculaire sous la forme d'un article moulé, pouvant être monté sur des moyens de façonnage et façonnable pour former ladite lentille.

**56.** Procédé de fabrication d'une prothèse oculaire optique selon l'une quelconque des revendications 1, 5 et 9, qui comprend la copolymérisation par chauffage d'un mélange de monomères, d'agents réticulants et d'un initiateur de polymérisation et le façonnage du polymère résultant.

**57.** Procédé de fabrication d'une prothèse oculaire optique selon l'une quelconque des revendications 1, 5 et 9, qui comprend la copolymérisation par irradiation d'un mélange de monomères et d'agents réticulants et le façonnage du polymère résultant.

**58.** Procédé de fabrication d'une prothèse oculaire optique selon l'une quelconque des revendications 1, 5 et 9, qui comprend le moulage et/ou le façonnage de l'article en polymère.

**Revendications pour les Etats contractants suivants : AT, BE, IT, LU, SE, CH**

**1.** Prothèse oculaire optique comprenant un élément moulé et/ou façonné biologiquement acceptable à base d'un polymère hautement réticulé, ledit élément étant sous forme hydratée ou non hydratée et ledit polymère du type formant un hydrogel par hydratation et pouvant être obtenu par copolymérisation d'au moins un monomère hydrophile avec un composant réticulant, caractérisé en ce que le composant réticulant comprend au moins un agent réticulant polymère polyinsaturé insoluble dans l'eau et éventuellement au moins un agent réticulant non polymère.

**2.** Prothèse selon la revendication 1, dans laquelle l'insaturation de l'agent réticulant polymère est une insaturation vinylique ou allylique.

**3.** Prothèse selon la revendication 1, dans laquelle l'insaturation de l'agent réticulant polymère est (meth) acrylique.

**4.** Prothèse selon la revendication 2, dans laquelle l'agent réticulant polymère polyinsaturé est une résine polyester polyinsaturée.

**5.** Prothèse selon l'une quelconque des revendications de 1 à 4, dans laquelle ledit composant réticulant comprend au moins un agent réticulant polymère et éventuellement au moins un agent réticulant non polymère ayant de deux à cinq insaturations oléfiniques par molécule, caractérisée en ce que l'agent réticulant polymère comprend un polyester insoluble dans l'eau à insaturations multiples présentant un rapport teneur en insaturations : motifs de base polymérisés d'au moins 1:3.

6. Prothèse selon la revendication 4 ou 5, dans laquelle la résine polyester polyinsaturée est une résine polyester aliphatique ou une résine polyester polyinsaturée à base de motifs aromatiques ou un mélange de ceux-ci.

7. Prothèse selon la revendication 6, dans laquelle la résine polyester polyinsaturée est une résine polyester à base de motifs téréphtalate ou isophtalate.

8. Prothèse selon la revendication 7, dans laquelle la résine polyester polyinsaturée est une résine polyester polyinsaturée contenant des motifs phénylisophtalate ou phényltéréphtalate.

9. Prothèse selon l'une quelconque des revendications 1 à 4, caractérisée en ce que l'agent réticulant polymère comprend un dérivé insoluble dans l'eau d'un polymère naturel ayant des insaturations oléfiniques multiples dans sa chaîne ou un dérivé insoluble dans l'eau d'un polymère synthétique qui est différent d'un homopolymère ou d'un copolymère de polyester et qui possède de multiples insaturations oléfiniques dans sa chaîne.

10. Prothèse selon la revendication 9, dans laquelle le polymère naturel ou synthétique est l'alcool polyvinylique, la cellulose, un ester de cellulose, un copolymère alcool vinylique-acétate de vinyle ou un copolymère méthacrylate de méthyle-méthacrylate de 2-hydroxyéthyle.

11. Prothèse selon la revendication 10, dans laquelle l'agent réticulant polymère est un ester (meth) acrylique d'alcool polyvinylique ou un ester (meth) acrylique de cellulose ou d'un ester de cellulose.

12. Prothèse selon la revendication 11, dans laquelle l'ester (meth) acrylique de cellulose ou d'ester de cellulose et le (meth) acrylate de cellulose, le (meth) acrylate d'acétate de cellulose, le (meth) acrylate de butyrate de cellulose ou le (meth) acrylate d'acétate butyrate de cellulose.

13. Prothèse selon la revendication 10, dans laquelle l'agent réticulant polymère est un dérivé (meth) acrylique amido ou une polyamine.

14. Prothèse selon l'une quelconque des revendications précédentes, dans laquelle l'agent réticulant polymère polyinsaturé contient du fluor.

15. Prothèse selon l'une quelconque des revendications précédentes, dans laquelle l'agent réticulant polymère est présent en une quantité inférieure à 20% rapportée au poids du polymère capable de former un hydrogel.

16. Prothèse selon l'une quelconque des revendications précédentes, et contenant un agent réticulant non polymère contenant trois insaturations ou plus par molécule.

17. Prothèse selon l'une quelconque des revendications 1 à 15, dans laquelle l'agent réticulant non polymère est le diméthacrylate d'éthylène glycol, le divinyl benzène, la divinyléthylène urée, la divinylpropylène urée, le méthacrylate d'allyle, le phtalate de diallyle, le bis (allylcarbonate) de diéthylèneglycol, le diméthacrylate de bisphénol A éthoxylé, le triméthacrylate de triméthylol propane, le fumarate de diallyle, le maléate de diallyle, le monohydroxy pentacrylate ou pentaméthacrylate de dipentaérythritol ou le diméthacrylate de di, tri, tetra ou polyéthylèneglycol.

18. Prothèse selon l'une quelconque des revendications précédentes, dans laquelle le monomère hydrophile est un monomère contenant de l'azote.

19. Prothèse selon l'une quelconque des revendications précédentes dans laquelle le monomère hydrophile est un monomère vinylique.

20. Prothèse selon l'une quelconque des revendications précédentes, dans laquelle le monomère hydrophile est un monomère vinylique hétérocyclique à noyau saturé ou insaturé.

21. Prothèse selon l'une quelconque des revendications précédentes, dans laquelle le monomère hydrophile est un monomère N-vinyl hétérocyclique.

22. Prothèse selon la revendication 21, dans laquelle le monomère N-vinyl hétérocyclique est un N-vinyl lactame.

23. Prothèse selon la revendication 22, dans laquelle le N-vinyl lactame est un dérivé de la pyrrolidone, de la pipéridone ou du caprolactame.

24. Prothèse selon la revendication 22 ou 23, dans laquelle le N-vinyl lactame est la N-vinyl-2-pyrrolidone, la N-vinyl-2-pipéridone, le N-vinyl caprolactame ou un dérivé de ces derniers.

25. Prothèse selon la revendication 21, dans laquelle le monomère N-vinyl hétérocyclique est le N-vinyl imidazole, le N-vinyl succinamide ou le N-vinyl glutarimide.

26. Prothèse selon la revendication 18, dans laquelle le monomère contenant de l'azote est un dérivé amido d'un composé (meth) acrylique.

27. Prothèse selon la revendication 26, dans laquelle le dérivé amido est un (meth) acrylamide ou un dérivé N-substitué de celui-ci.

28. Prothèse selon la revendication 26 ou 27, dans laquelle le dérivé amido est le N-méthyl acrylamide, le N-isopropyl acrylamide, le N-diacétone acrylamide, le N,N-diméthyl acrylamide, le N,N-diméthylaminométhyl acrylamide, le N,N-diméthylaminoéthyl acrylamide, le N-méthylaminoisopropyl acrylamide ou un analogue de type méthacrylamide de l'un quelconque des acrylamides précédents.

29. Prothèse selon l'une quelconque des revendications 1, 5 et 9, dans laquelle le monomère hydrophile est un éther monovinylique, un polyéther monovinylique, un éther vinylique hydroxylé, un (meth) acrylate d'aminoalkyle, un (meth) acrylate d'hydroxyalkyle ou un dérivé alcoxy de ceux-ci.

30. Prothèse selon l'une quelconque des revendications précédentes, dans laquelle le (s) monomère(s) hydrophile(s) constitue(nt) au moins 35% en poids rapporté au poids du polymère formant un hydrogel.

31. Prothèse selon la revendication 30, dans laquelle le(s) monomère(s) hydrophile(s) constitue(nt) au moins 50% en poids rapporté au poids du polymère formant un hydrogel.

32. Prothèse selon l'une quelconque des revendications précédentes, et contenant un ou plusieurs comonomères hydrophobes.

33. Prothèse selon la revendication 32, dans laquelle le comonomère hydrophobe est le styrène, un ester vinylique, un ester de maléate ou un (meth) acrylate d'alkyle.

34. Prothèse selon l'une quelconque des revendications précédentes, et contenant un absorbeur d'UV.

35. Prothèse selon la revendication 34, dans laquelle l'absorbeur d'UV est un monomère absorbant les UV copolymérisé en une structure polymère.

36. Prothèse selon la revendication 35, dans laquelle le monomère absorbant les UV est un monomère contenant un des chromophores suivants, notamment un résidu de 2-hydroxybenzophénone ; 2,4-dihydroxybenzophénone ; 2,2′,4-trihydroxybenzophénone ; 2,2′,4,4′-tétrahydroxybenzophénone ; 2-(2H-benzotriazol-2-yl) phénol ; monobenzoate de résorcinol ; du salicylate de phényle ; du téréphtalate de diaryle ; de l'isophtalate de diaryle ou un dérivé de ceux-ci ; ou l'acide cinnamique substitué absorbant les UV ou un dérivé de celui-ci.

37. Prothèse selon la revendication 35 ou 36, dans laquelle le monomère absorbant les UV est un agent réticulant non polymère.

38. Prothèse selon l'une quelconque des revendications précédentes, et contenant un monomère carbocyclique aromatique fluoré.

39. Prothèse selon la revendication 38, dans laquelle le monomère fluoré répond à la formule générale:

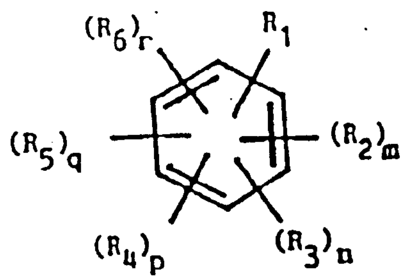

dans laquelle $R_1$ est un reste insaturé éventuellement fluoré, $R_2$ est un atome de fluor, $R_2$ à $R_6$ représentent chacun des substituants identiques ou différents, n à r sont, chacun indépendamment, zéro ou un, m est zéro ou un entier jusqu'à une valeur 5-(n+p+q+r) sous réserve que m représente zéro seulement lorsque $R_1$ représente un reste insaturé fluoré.

**40.** Prothèse selon la revendication 39, dans laquelle $R_1$ est un reste hydrocarboné fluoré à insaturation éthylénique et m à r représentent zéro.

**41.** Prothèse selon la revendication 39 ou 40, dans laquelle le monomère fluoré est du styrène fluoré.

**42.** Prothèse selon la revendication 41, dans laquelle le monomère fluoré est di-, tri-, tétra- ou penta-fluoré sur le cycle aromatique.

**43.** Prothèse selon la revendication 41 ou 42, dans laquelle le monomère fluoré est le pentafluorostyrène.

**44.** Prothèse selon l'une quelconque des revendications 39 à 43, dans laquelle le monomère fluoré est présent en une quantité inférieure à 25% en poids rapporté au poids du polymère.

**45.** Prothèse selon la revendication 44, dans laquelle le monomère fluoré est présent en une quantité de 0,5% à 10% en poids rapporté au poids du polymère.

**46.** Prothèse selon la revendication 9, et comprenant du méthacrylate de méthyle, du diméthacrylate de bisphénol A éthoxylé, du diméthacrylate de polyéthylène glycol, du méthacrylate d'allyle, du méthacrylate de 2-hydroxyéthyle, du méthacrylate d'acétate de cellulose, de la diacétone acrylamide et de la N-vinyl pyrrolidone.

**47.** Prothèse selon la revendication 46, dans laquelle la N-vinyl-2-pyrrolidone constitue 65 parties en poids rapporté au poids du polymère.

**48.** Prothèse oculaire optique selon la revendication 46, dans laquelle le polymère est obtenu par copolymérisation d'un mélange ayant la composition pondérale suivante :

| | |
|---|---|
| méthacrylate de méthyle | 30 parties |
| diméthacrylate de bisphénol A éthoxylé | 0,3 partie |
| diméthacrylate de polyéthylène glycol ethoxy é | 0,25 partie |
| méthacrylate d'allyle | 0,25 partie |
| méthacrylate de 2-hydroxyéthyle | 2,5 parties |
| méthacrylate d acétate de cellulose purifié | 1,5 partie |
| diacétone acrylamide | 0,25 partie |
| N-vinyl-2-pyrrolidone | 65 parties |

**49.** Prothèse selon l'une quelconque des revendications 46 à 48, dans laquelle le méthacrylate d'acétate de cellulose est un agent réticulant polymère polyinsaturé ayant un poids moléculaire moyen en poids d'environ 50000 et un degré d'insaturation d'environ 1/1000 exprimé en tant que nombre d'insaturations par segment de polymère d'un poids moléculaire moyen en poids de 1000.

**50.** Prothèse selon l'une quelconque des revendications précédentes, et comprenant un monomère carbocyclique aromatique fluoré et une proportion d'un comonomère hydrophile fortement hydrophile telle qu'un élément d'hydrogel formé par hydratation de celui-ci possède une teneur en eau à l'équilibre à 20°C supérieure à 50%.

**51.** Prothèse selon la revendication 50, dans laquelle l'hydrogel a une teneur en eau à l'équilibre supérieure à 60%.

**52.** Prothèse selon l'une quelconque des revendications 1, 5 et 9, dans laquelle l'agent réticulant polymère polyinsaturé insoluble dans l'eau est choisi parmi:

(i) les dérivés d'ester de cellulose polyinsaturés ayant un poids moléculaire moyen de 25.000 à 100.000 et de 1 à 3 insaturations par motif de glucose de base; et

(ii) les dérivés de polyester polyinsaturés ayant un poids moléculaire moyen de 2.000 à 8.000 et de 0,5 à 1 insaturation par motif de base polymérisé.

**53.** Prothèse selon l'une quelconque des revendications précédentes, qui est sous la forme d'une lentille de contact hydratable.

**54.** Prothèse selon l'une quelconque des revendications 1 à 52, qui est sous la forme d'une lentille intraoculaire hydratable.

**55.** Lentille de contact ou précurseur de lentille intraoculaire sous la forme d'un article moulé, pouvant être monté sur des moyens de façonnage et façonnable pour former ladite lentille.

**56.** Procédé de fabrication d'une prothèse oculaire optique selon l'une quelconque des revendications 1, 5 et 9, qui comprend la copolymérisation par chauffage d'un mélange de monomères, d'agents réticulants et d'un initiateur de polymérisation et le façonnage du polymère résultant.

**57.** Procédé de fabrication d'une prothèse oculaire optique selon l'une quelconque des revendications 1, 5 et 9, qui comprend la copolymérisation par irradiation d'un mélange de monomères et d'agents réticulants et le façonnage du polymère résultant.

**58.** Procédé de fabrication d'une prothèse oculaire optique selon l'une quelconque des revendications 1, 5 et 9, qui comprend le moulage et/ou le façonnage de l'article en polymère.